# EUROPEAN PATENT APPLICATION

(11) **EP 4 764 293 A2**
(43) Date of publication of application: **24.06.2026**
(21) Application number: 25214486.0
(22) Date of filing: 10.11.2025
(51) Int. Cl.: F16M 11/16, F16M 11/10, F16M 11/20, F16M 11/42, H04N 5/64

(54) **DISPLAY DEVICE**

(30) Priority: 20.12.2024 KR 20240192369
(71) Applicant: LG Electronics Inc., Yeongdeungpo-gu Seoul 07336 (KR)
(72) Inventor: LEE, Kangyeung, Seoul (KR); KIM, Sanghoon, Seoul (KR); JUNG, Hyunjin, Seoul (KR)
(74) Representative: Vossius & Partner Patentanwälte Rechtsanwälte mbB

(57) **Abstract**

A display device (1) comprising: a display (10) including a display panel (11) and a battery; a base (20); a pole (30) coupled to the base (20); an arm mount (39) spaced apart from the display (10), a support arm (50) connecting the display (10) and the arm mount (39); and a connector (40) disposed between the support arm (50) and the display (10) and coupled to the display (10), wherein the support arm (50) comprises an inner arm (50A) rotatably coupled to the display (10) and the arm mount (39); and an arm cover (50C) covering the inner arm (50A).

## Description

### CROSS-REFERENCE TO RELATED APPLICATION

This application claims the priority benefit of Korean Patent Application No. 10-2024-0192369, filed on December 20, 2024, the disclosure of which is incorporated herein by reference.

### BACKGROUND OF THE INVENTION

### Field of the invention

The present disclosure relates to a display device.

### Description of the Related Art

With the development of information society, there has been a growing demand for various types of display devices. In order to meet such demand, various display devices, such as a liquid crystal display (LCD) device, a plasma display panel (PDP), an electro luminescent display (ELD), a vacuum fluorescent display (VFD), an organic light emitting diode (OLED) display, and the like, have been developed and used.

Among them, an LCD panel includes a TFT substrate and a color substrate that are opposite each other with a liquid crystal layer interposed therebetween, and can display an image using light provided from a backlight unit. In addition, an OLED panel can display an image by depositing a self-luminescent organic layer on a substrate having a transparent electrode formed thereon.

Recently, numerous research has been conducted on a structure for freely adjusting the angle or position of a display.

### SUMMARY OF THE INVENTION

It is an object of the present disclosure to solve the above and other problems.

Another object of the present disclosure may be to provide a display device including a stand for supporting a display.

Another object of the present disclosure may be to provide a structure for freely adjusting the angle or height of a display.

Another object of the present disclosure may be to provide a rotational structure of a support arm of a display.

Another object of the present disclosure may be to provide a coupling structure of an arm cover of a support arm.

Another object of the present disclosure may be to provide a structure for blocking a gap between an arm cover and an arm mount.

Another object of the present disclosure may be to provide a connector structure for connecting a support arm to a display.

Another object of the present disclosure may be to provide a structure of a substrate of a connector and a cable holder connected to the substrate.

In accordance with an aspect of the present disclosure for achieving the above and other objectives, a display device may include: a display including a display panel and a battery; a base; a pole coupled to the base; an arm mount spaced apart from the display; and a support arm connecting the display and the arm mount; and a connector disposed between the support arm and the display and coupled to the display, wherein the support arm may include: an inner arm rotatably coupled to the display and the arm mount; and an arm cover covering the inner arm.

### BRIEF DESCRIPTION OF THE DRAWINGS

The above and other objects, features and advantages of the present invention will be more apparent from the following detailed description in conjunction with the accompanying drawings, in which:

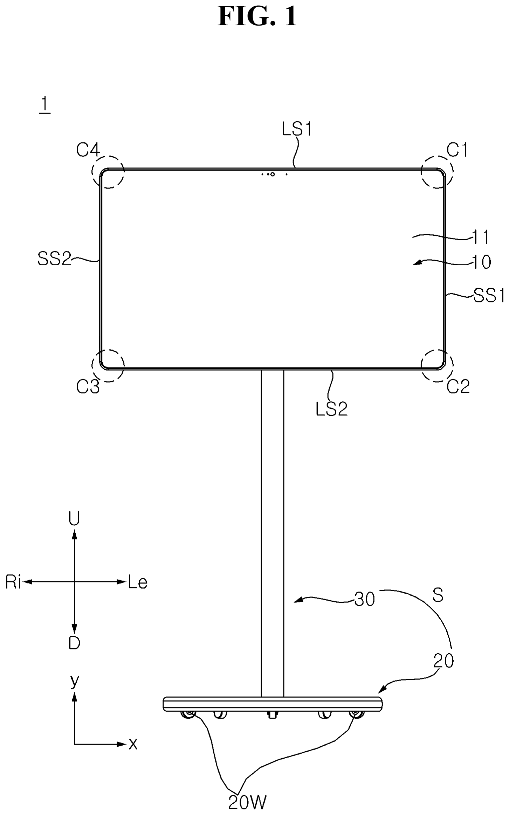

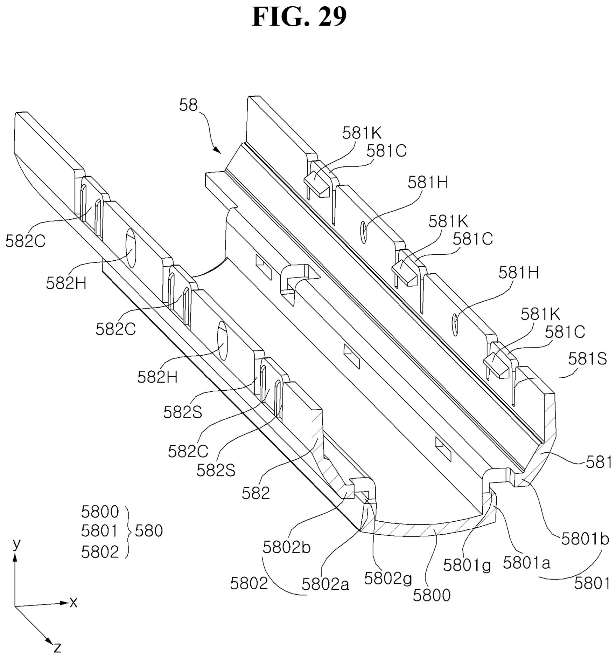

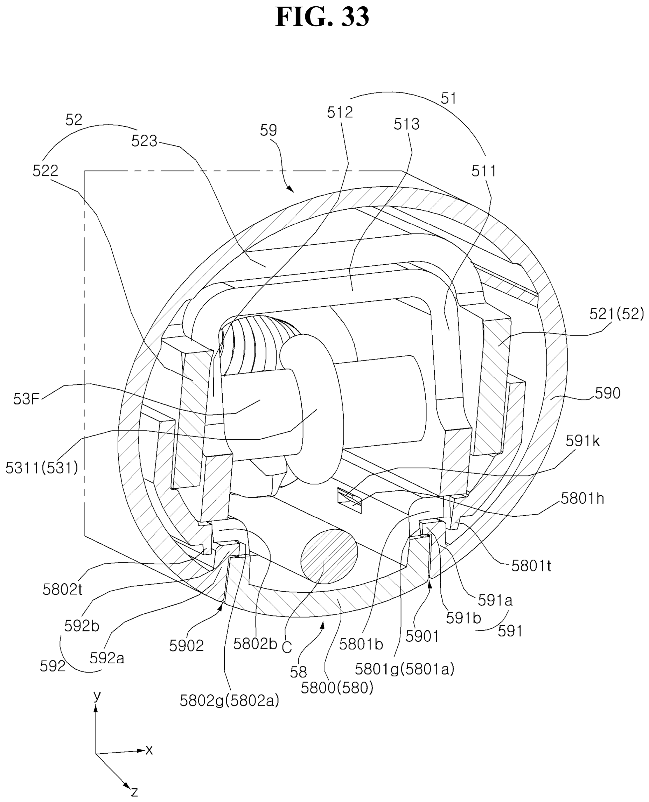

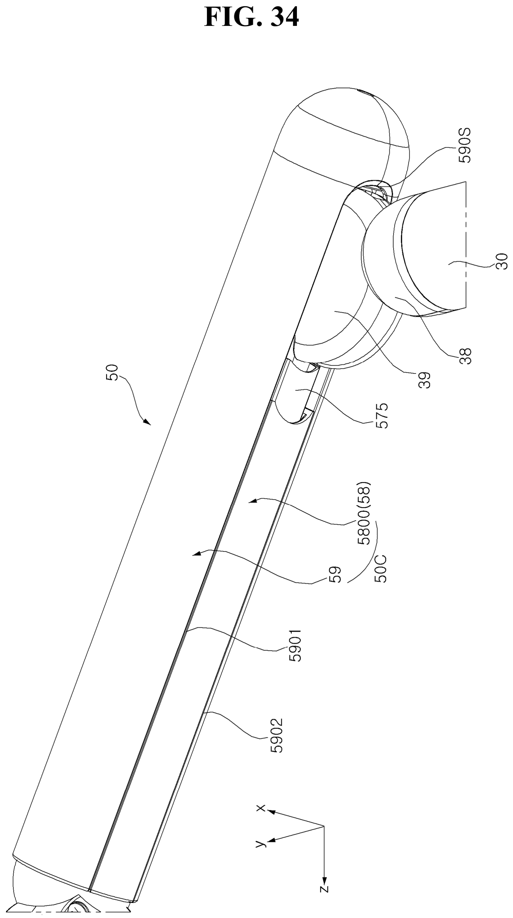

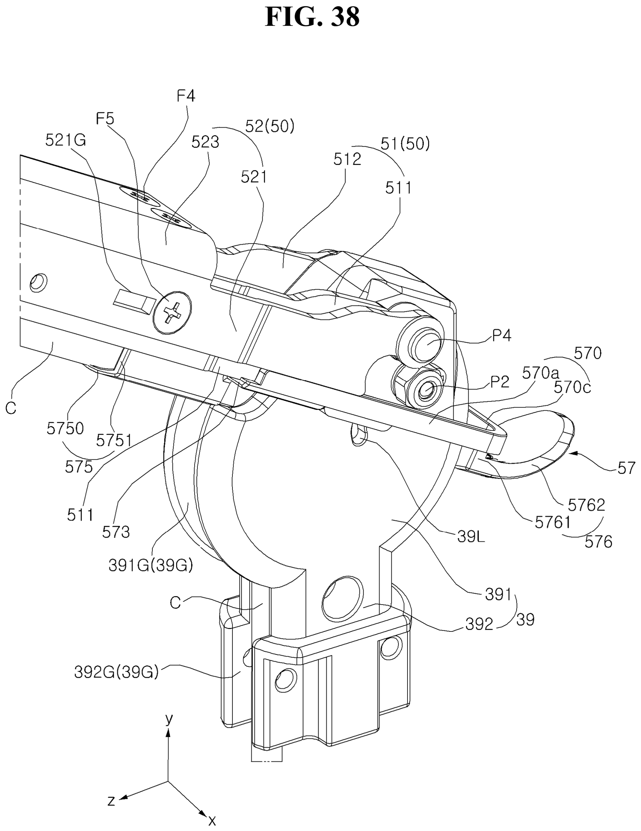

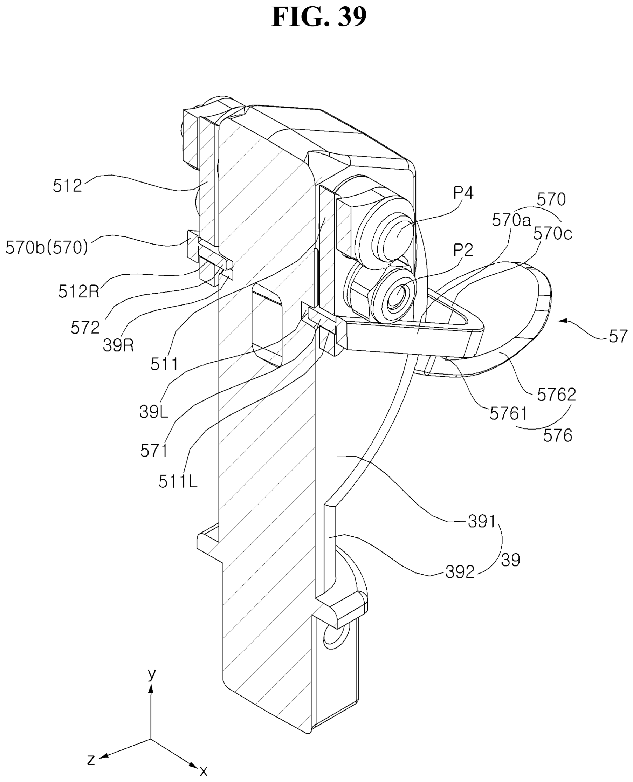

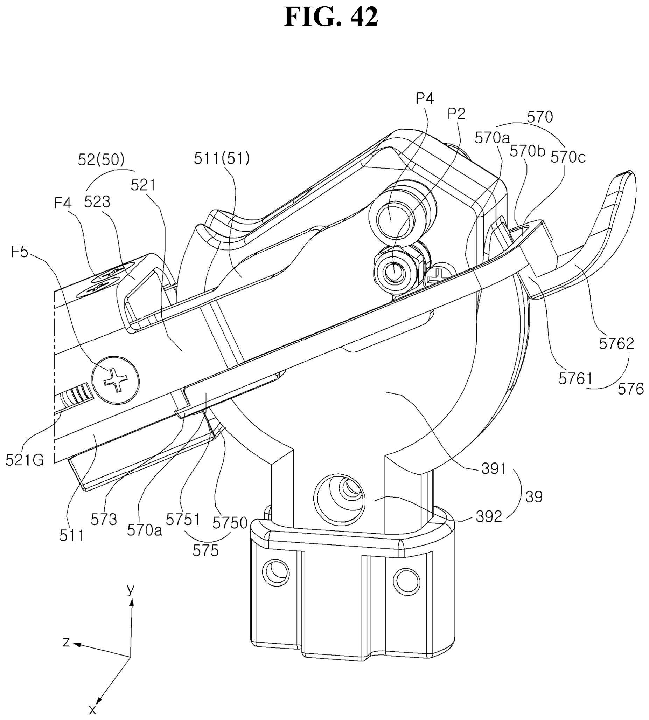

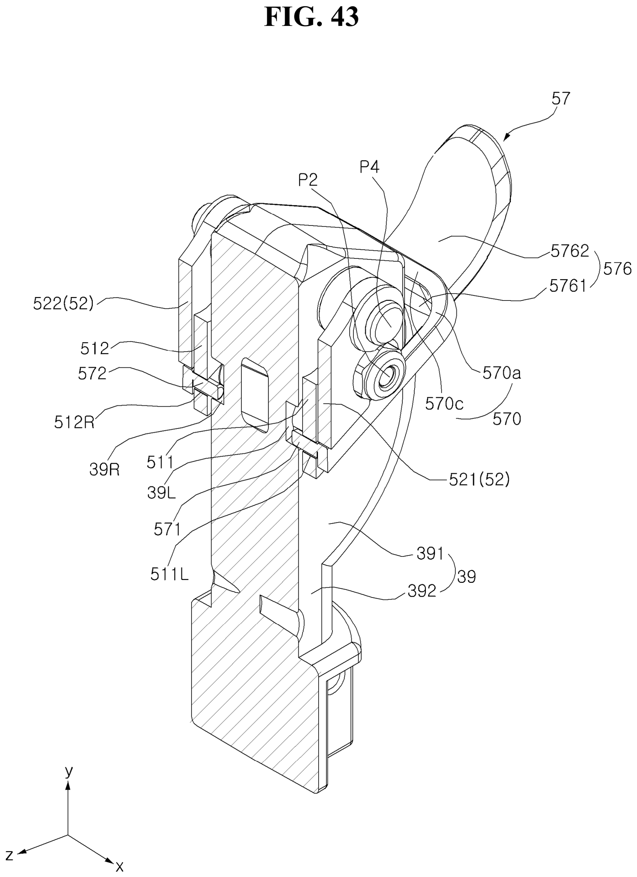

FIGS. 1 to 49 are diagrams illustrating examples of a display device according to embodiments of the present disclosure.

### DETAILED DESCRIPTION

Description will now be given in detail according to exemplary embodiments disclosed herein, with reference to the accompanying drawings. For the sake of brief description with reference to the drawings, the same or equivalent components may be denoted by the same reference numbers, and description thereof will not be repeated.

In the following description, a suffix such as "module" and "unit" may be used to refer to elements or components. Use of such a suffix herein is merely intended to facilitate description of the specification, and the suffix itself is not intended to give any special meaning or function.

In the present disclosure, that which is well known to one of ordinary skill in the relevant art has generally been omitted for the sake of brevity. The accompanying drawings are used to help easily understand various technical features and it should be understood that the embodiments disclosed herein are not limited by the accompanying drawings. As such, the present disclosure should be construed to extend to any alterations, equivalents, and substitutes in addition to those which are particularly set out in the accompanying drawings.

Although the terms "first", "second", etc. may be used herein to describe various elements, these elements should not be limited by these terms. These terms are only used to distinguish one element from another.

When an element is referred to as being "coupled", "fixed", "mounted", "connected" or "linked" to another element, intervening elements may also be present. In contrast, when an element is referred to as being "directly coupled", "directly fixed", "directly mounted", "directly connected" or "directly linked" to another element, there are no intervening elements present.

A singular representation may include a plural representation unless the context clearly indicates otherwise.

Terms such as "comprises or includes" or "has" are used herein and should be understood that they are intended to indicate an existence of features, numbers, steps, operations, elements, components, or combinations thereof, disclosed in the specification, but do not preclude the presence or addition of one or more other features, numbers, steps, operations, elements, components, or combinations thereof.

The directions "up (U)", "down (D)", "left (Le)", "right (Ri)", "front (F)", and "rear (R)" shown in the drawings are used only for convenience of description, and the technical concept disclosed in this specification is not limited by these directions.

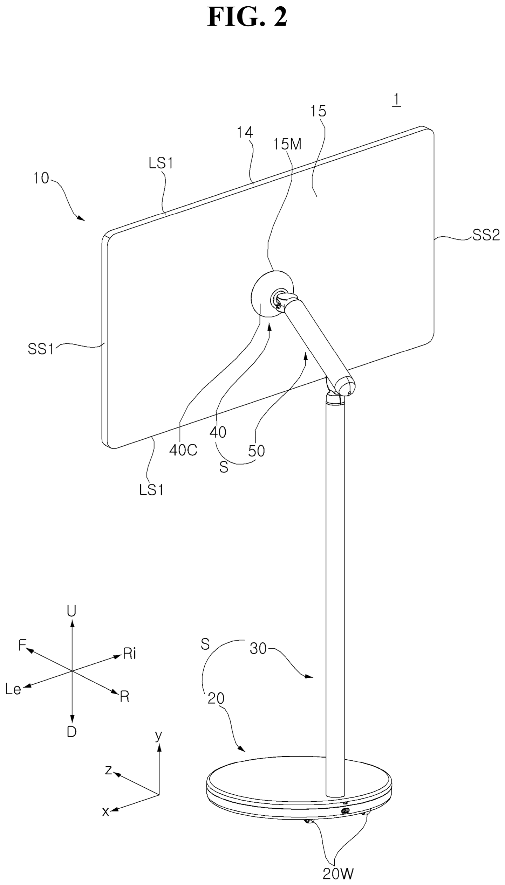

Referring to FIGS. 1 and 2, a display device 1 may include a display 10. The display 10 may include a display panel 11 to display an image. The image may be displayed on a front surface of the display panel 11. The display 10 may be referred to as a display unit 10 or a head 10.

The display 10 may include a first long side LS1, a second long side LS2 opposite the first long side LS1, a first short side SS1 adjacent to the first long side LS1 and the second long side LS2, and a second short side SS2 opposite the first short side SS1. Meanwhile, for ease of explanation, it is illustrated and described that lengths of the first and second long sides LS1 and LS2 are greater than lengths of the first and second short sides SS1 and SS2, but the lengths of the first and second long sides LS1 and LS2 may be substantially equal to the lengths of the first and second short sides SS1 and SS2.

A direction parallel to the short sides SS1 and SS2 of the display 10 may be referred to as an up-and-down direction. A direction parallel to the long sides LS1 and LS2 of the display 10 may be referred to as a left-and-right direction. A direction perpendicular to the short sides SS1 and SS2 and the long sides LS1 and LS2 of the display 10 may be referred to as a front-and-rear direction.

A direction in which the display 10 displays an image may be referred to as a front (F, z), and a direction opposite to the front may be referred to as a rear (R). The first short side SS1 may be referred to as a left side (Le, x). The second short side SS2 may be referred to as a right side (Ri). The first long side LS1 may be referred to as an upper side (U, y). The second long side LS2 may be referred to as a lower side (D).

The first long side LS1, the second long side LS2, the first short side SS1, and the second short side SS2 may be referred to as edges of the display 10. Points where the first long side LS1, the second long side LS2, the first short side SS1, and the second short side SS2 meet one another may be referred to as corners. A point where the first long side LS1 and the first short side SS1 meet may be referred to as a first corner C1. A point where the first short side SS1 and the second long side LS2 meet may be referred to as a second corner C2. A point where the second long side LS2 and the second short side SS2 meet may be referred to as a third corner C3. A point where the second short side SS2 and the first long side LS1 meet may be referred to as a fourth corner C4.

A stand S may support the display 10. The stand S of the display device 1 may be placed on a surface (e.g., a floor, the ground, etc.), thereby allowing the display 10 of the display device 1 to be spaced apart from the surface. The stand S may include a base 20, a pole 30, a connector 40, and a support arm 50.

The base 20 may be placed on a surface. The base 20 may be rounded or angled. A plurality of wheels 20W may be mounted to the base 20. The base 20 may be referred to as a moving base 20.

The pole 30 may extend from the base 20. A longitudinal direction of the pole 30 may be parallel to the vertical direction. A lower end of the pole 30 may be coupled to the base 20 while being adjacent to a periphery of the base 20.

The support arm 50 may extend in a direction intersecting the pole 30. The support arm 50 may be coupled to the pole 30 while being adjacent to an upper end of the pole 30. The connector 40 may be disposed between the display 10 and the pole 30, and may be coupled to the display 10 and the pole 30.

Accordingly, the display 10 may be supported by the stand S, and may be spaced apart from the surface on which the base 20 is placed.

Meanwhile, a battery (not shown) may be embedded in at least one of the base 20, the pole 30, the support arm 50, or the display 10. The display device 1 may be driven by power supplied from the battery.

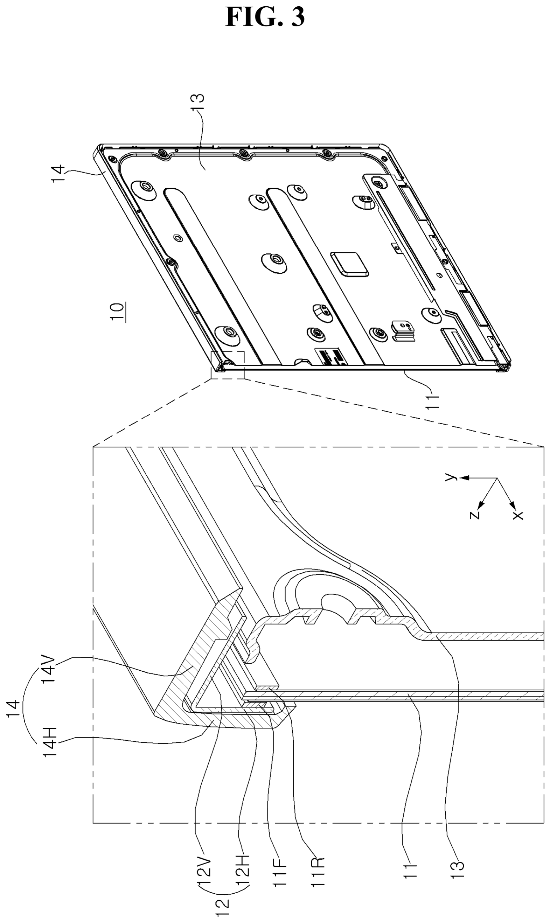

Referring to FIG. 3, the display 10 may include a display panel 11, a middle cabinet 12, a frame 13, a side frame 14, and a back cover 15.

The display panel 11 may define a front surface of the display 10. For example, the display panel 11 may be a liquid crystal display (LCD) panel, an organic light emitting diode (OLED) panel, or a light emitting diode (LED) panel. The display panel 11 may include a plurality of pixels to output an image in accordance with color, brightness, and chroma of each pixel. The display panel 11 may be divided into an active area in which an image is displayed and a de-active area in which no image is displayed. The display panel 11 may generate light corresponding to red, green or blue color in response to a control signal.

The middle cabinet 12 may extend along an edge of the display panel 11. A horizontal portion 12H may be positioned at the front of the display panel 11. A vertical portion 12V may intersect the horizontal portion 12H, and may cover a side surface of the display panel 11. In some embodiments, the middle cabinet 12 may be omitted.

The frame 13 may be positioned behind the display panel 11. Electronic components such as a printed circuit board (PCB) may be mounted on the frame 13. For example, a power supply board, a timing controller board, and a main board may be coupled to the rear of the frame 13.

The side frame 14 may extend along an edge of the frame 13. The side frame 14 may define an edge of the display 10. A horizontal portion 14H may be positioned at the front of the horizontal portion 12H of the middle cabinet 12. A vertical portion 14V may cover the vertical portion 12V of the middle cabinet 12.

The back cover 15 (see FIG. 2) may define a rear surface of the display 10. The back cover 15 may cover the rear of the frame 13, and may be coupled to the frame 13.

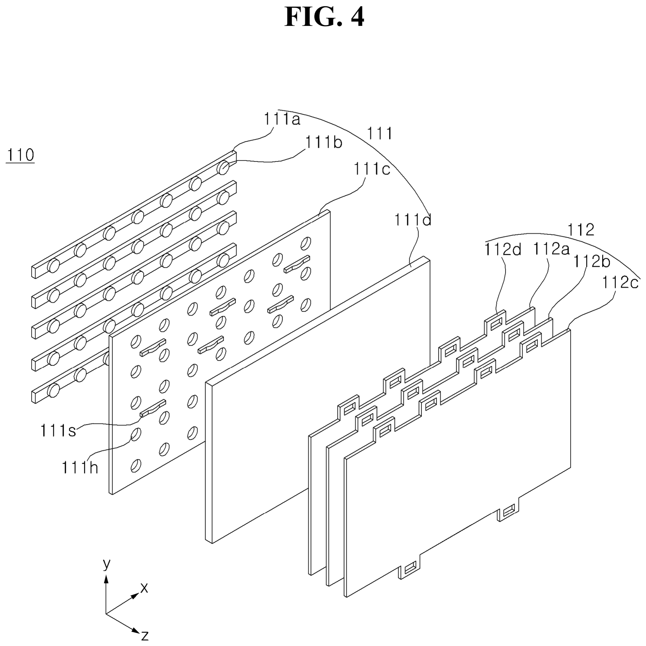

Referring to FIGS. 3 and 4, a backlight unit 110 may be disposed between the display panel 11 and the frame 13, and may be coupled to the frame 13. The display panel 11 may be referred to as an LCD panel 11. The backlight unit 110 may include an optical layer 111 and an optical sheet 112.

The optical layer 111 may include a substrate 111a, at least one light source 111b such as a light emitting diode (LED), a reflective sheet 111c, and a diffusion plate 111d. The reflective sheet 111c may include a hole 111h in which the light source 111b is positioned. The diffusion plate 111d may be positioned at the front of the reflective sheet 111c. A spacer 111s may support a rear surface of the diffusion plate 111d between the reflective sheet 111c and the diffusion plate 111d.

The optical sheet 112 may be positioned at the front of the diffusion plate 111d. The optical sheet 112 may include at least one of a diffusion sheet or a prism sheet.

Accordingly, light from the light source 111b may be provided to the display panel 11 through the diffusion plate 111d and the optical sheet 112. Meanwhile, the display panel 11 of the present disclosure may be an OLED panel that does not require the backlight unit 110 described above or another type of panel.

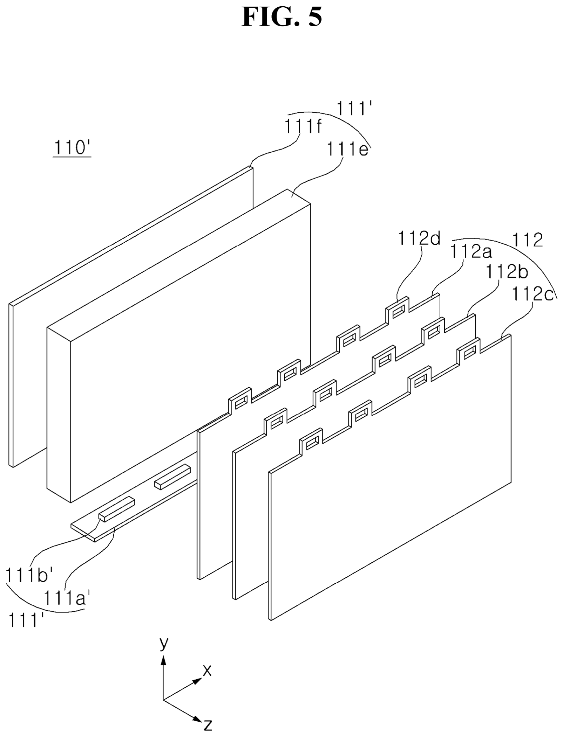

Referring to FIGS. 3 and 5, a backlight unit 110' may be disposed between the display panel 11 and the frame 13, and may be coupled to the frame 13. The display panel 11 may be referred to as an LCD panel 11. The backlight unit 110' may include an optical layer 111' and an optical sheet 112.

The optical layer 111' may include a substrate 111a', at least one light source 111b' such as a light emitting diode (LED), a reflective sheet 111f, and a light guide plate 111e. The light guide plate 111e may be disposed between the frame 13 and the optical sheet 112, and may be supported by the frame 13. The reflective sheet 111f may be disposed between the frame 13 and the light guide plate 111e, and may be supported by the frame 13.

Accordingly, light from the light source 111b' may be provided to the display panel 11 through the light guide plate 111e and the optical sheet 112. Meanwhile, the display panel 11 of the present disclosure may be an OLED panel that does not require the backlight unit 110' described above or another type of panel.

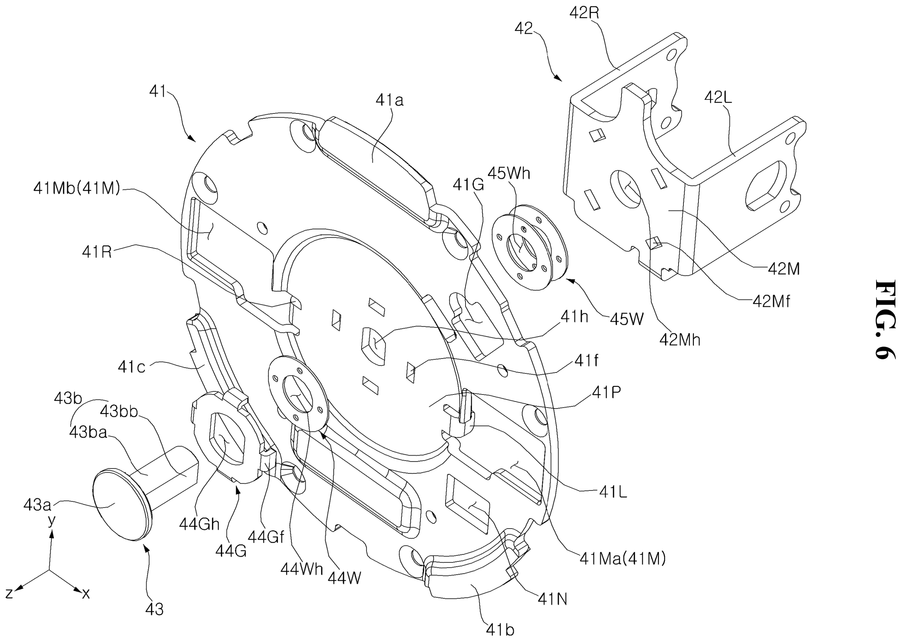

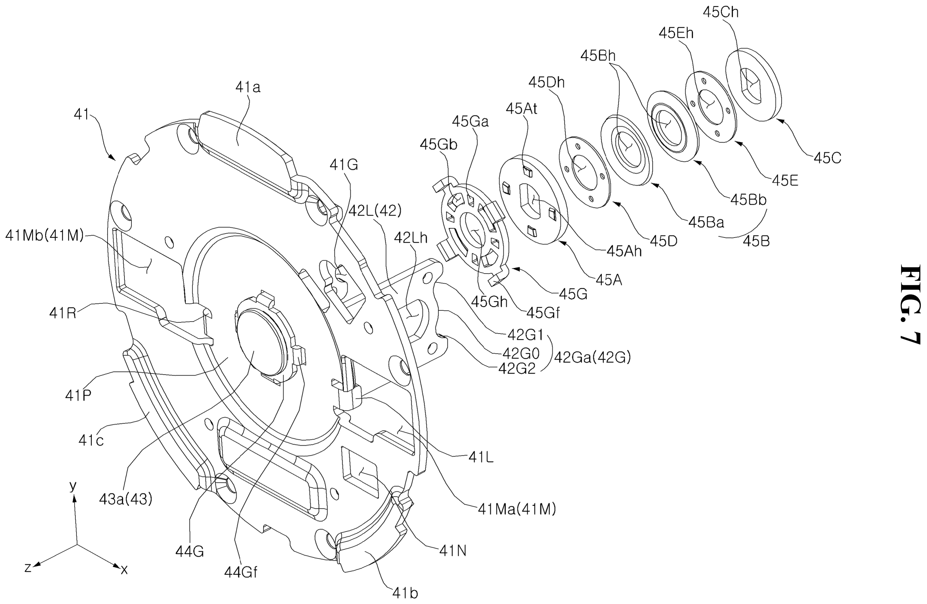

Referring to FIGS. 6 and 7, a front bracket 41 may have a generally circular plate shape. The front bracket 41 may face the back cover 15 (see FIG. 2) of the display 10. The front bracket 41 may be parallel to a rear surface of the back cover 15. The front bracket 41 may be referred to as a first bracket 41.

A plurality of coupling portions 41a, 41b, and 41c may be formed at an edge of the front bracket 41. The plurality of coupling portions 41a, 41b, and 41c may be recessed forward from a rear surface of the front bracket 41. The plurality of coupling portions 41a, 41b, and 41c may form a step that rises forward from a front surface of the front bracket 41. The coupling portions 41a, 41b, 41c may be referred to as recessed portions 41a, 41b, 41c, protruding portions 41a, 41b, 41c, or stepped portions 41a, 41b, 41c. A first coupling portion 41a may be positioned in an upper middle of the front bracket 41. A second coupling portion 41b may be positioned in a lower left portion of the front bracket 41. A third coupling portion 41c may be positioned in a lower right portion of the front bracket 41. For example, an angle between the first to third coupling portions 41a, 41b, 41c with respect to a center of the front bracket 41 may be 120 degrees.

A pivot shaft 43 may extend in a direction intersecting the front bracket 41. The pivot shaft 43 may be referred to as a first shaft 43. A diameter of a head 43a of the pivot shaft 43 may be greater than a diameter of a body 43b of the pivot shaft 43. A lateral surface of the body 43b may include a curved surface 43ba and a flat surface 43bb. The flat surface 43bb may be formed by cutting out a portion of the lateral surface of the body 43b. A pair of flat surfaces 43bb may be positioned opposite each other. A hole 41h may be formed in a central portion of the front bracket 41. The hole 41h may have the same shape as a cross-section of the body 43b of the pivot shaft 43. The pivot shaft 43 may pass through the hole 41h. The pivot shaft 43 and the front bracket 41 may rotate together about an axial direction of the pivot shaft 43.

A front grab 44G may be disposed between the head 43a of the pivot shaft 43 and the front surface of the front bracket 41. A hole 44Gh of the front grab 44G may be aligned with the hole 41h of the front bracket 41, and may have the same shape as the hole 41h. The body 43b of the pivot shaft 43 may pass through the holes 44Gh and 41h. Protrusions 44Gf may protrude from the front grab 44G toward the front bracket 41, and may be inserted into and fixed to grooves 41f or holes 41f of the front bracket 41. The protrusions 44Gf may be spaced 90 degrees apart from each other. At least one washer 44W may be disposed between the front grab 44G and the front bracket 41, and may have a circular hole 44Wh. The body 43b of the pivot shaft 43 may pass through the hole 44Wh of the washer 44W. Meanwhile, a region of the front bracket 41 where the holes 41h and 41f are formed may be referred to as a pressed portion 41P. Meanwhile, at least one hole (41M, 41N, 41G) may be formed outside the pressed portion 41P.

A rear bracket 42 may be positioned at the rear of the front bracket 41. The rear bracket 42 may be referred to as a second bracket 42. The rear bracket 42 may have a generally U-shape. The rear bracket 42 may include a mount 42M, a first wing 42L, and a second wing 42R.

The mount 42M may face the front bracket 41. A circular hole 42Mh of the mount 42M may be aligned with the hole 41h of the front bracket 41. The body 43b of the pivot shaft 43 may pass through the hole 42Mh of the mount 42M, and may rotate relative to the hole 42Mh. In other words, the rear bracket 42 may not be rotated during the rotation of the pivot shaft 43. At least one washer 45W may be disposed between the front bracket 41 and the mount 42M of the rear bracket 42, and may have a circular hole 45Wh. The body 43b of the pivot shaft 43 may pass through the hole 45Wh of the washer 45W.

The first wing 42L may extend rearward from a first side (left side) of the mount 42M. The first wing 42L may define a left surface of the rear bracket 42. The first wing 42L may be referred to as a left wing 42L.

The second wing 42R may extend rearward from a second side (right side) of the mount 42M. The second wing 42R may define a right surface of the rear bracket 42. The second wing 42R may be referred to as a right wing 42R.

Members 45G, 45A, 45B, 45C, 45D, and 45E described hereinafter may be disposed between the first wing 42L and the second wing 42R, and may be coupled to the mount 42M.

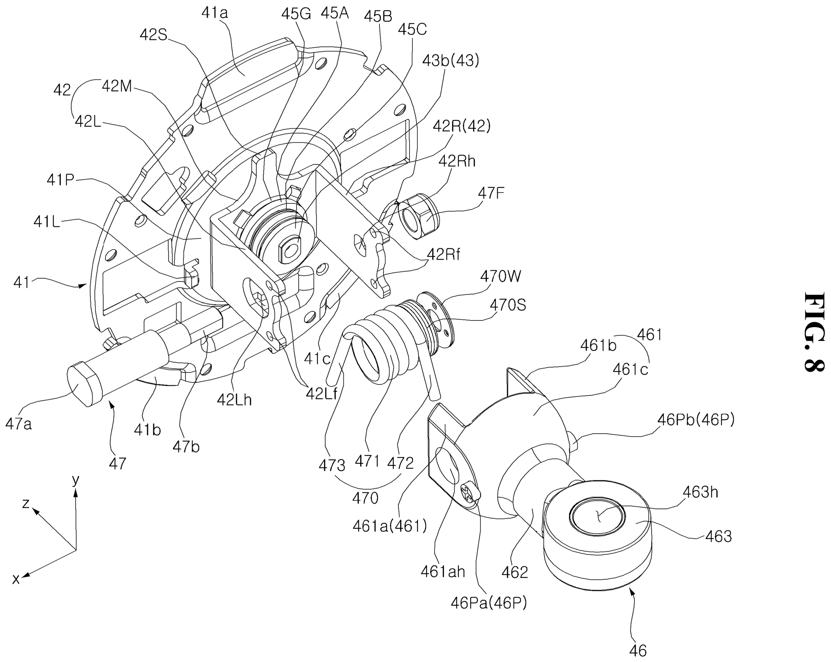

Referring to FIGS. 7 and 8, a rear grab 45G may be positioned at the rear of the mount 42M. Protrusions 45Gf may protrude from the rear grab 45G toward the mount 42M, and may be inserted into and fixed to grooves 42Mf or holes 42Mf (see FIG. 6) of the mount 42M. The protrusions 45Gf may be spaced 90 degrees apart from each other. A circular hole 45Gh of the rear grab 45G may be aligned with the hole 42Mh of the mount 42M. The body 43b of the pivot shaft 43 may pass through the holes 42Mh and 45Gh, and may rotate relative to the holes 42Mh and 45Gh. In other words, the rear bracket 42 and the rear grab 45G may not be rotated during the rotation of the pivot shaft 43.

A plurality of fixing holes 45Ga and a plurality of slots 45Gb may be formed around the hole 45Gh of the rear grab 45G. The fixing holes 45Ga and the slots 45Gb may be alternatively arranged along a boundary of the hole 45Gh. The fixing holes 45Ga may be spaced 90 degrees apart from each other, and the slots 45Gb may be spaced 90 degrees apart from each other. In the arrangement direction of the fixing holes 45Ga and the slots 45Gb, a length of the slot 45Gb may be greater than a length of the fixing hole 45Ga.

A disc 45A may be positioned at the rear of the rear grab 45G, and may have a hole 45Ah through which the body 43b of the pivot shaft 43 passes. The hole 45Ah may have the same shape as the cross-section of the body 43b, and the disc 45A may be rotated together with the pivot shaft 43. A plurality of protrusions 45At may protrude toward the rear grab 45G from one surface (front surface) of the disc 45A that faces the rear grab 45G, and may be spaced apart from each other in a circumferential direction of the disc 45A. The protrusions 45At may be spaced 90 degrees apart from each other. The protrusion 45At may have a size equal to or corresponding to a size of the fixing hole 45Ga. When the protrusion 45At is inserted into the fixing hole 45Ga, the rotation of the disc 45A and the pivot shaft 43 may be restricted by the rear grab 45G. When the protrusion 45At is inserted into the slot 45Gb, the disc 45A and the pivot shaft 43 may rotate within the slot 45Gb.

A disc spring 45B may be positioned at the rear of the disc 45A, and may have a circular hole 45Bh through which the body 43b of the pivot shaft 43 passes. The disc spring 45B may have elasticity, and may be convex forward or rearward. The disc spring 45B may generate an elastic force in the axial direction of the pivot shaft 43. For example, the disc springs 45B may be provided as a pair. A first disc spring 45Ba may be convex rearward, and a second disc spring 45Bb may be convex forward.

A cap 45C may be positioned at the rear of the disc spring 45B, and may have a hole 45Ch through which the body 43b of the pivot shaft 43 passes. The hole 45Ch may have the same shape as the cross-section of the body 43b. The cap 45C may be fixed to the body 43b, and may press the disc spring 45B and the disc 45A toward the rear grab 45G. The cap 45C such as a nut may be screw-coupled to the body 43b. A first washer 45D may be disposed between the disc 45A and the disc spring 45B, and may have a circular hole 45Dh through which the body 43b of the pivot shaft 43 passes. A second washer 45E may be disposed between the disc spring 45B and the cap 45C, and may have a circular hole 45Eh through which the body 43b of the pivot shaft 43 passes.

Accordingly, the front bracket 41 may be rotated together with the pivot shaft 43, the front grab 44G, the disc 45A, and the cap 45C. The front bracket 41 may be rotated independently of the rear bracket 42, the rear grab 45G, the disc spring 45B, and the washers 44W, 45D, and 45E. In other words, even when the front bracket 41 rotates, the rear bracket 42, the rear grab 45G, the disc spring 45B, and the washers 44W, 45D, and 45E may not rotate.

The pivot shaft 43 may provide a pivot axis for the front bracket 41. Due to the elastic force of the disc spring 45B, a pivot angle of the front bracket 41 may be maintained unless a certain level of force is applied.

A first protruding portion 41L may protrude rearward from the front bracket 41. A second protruding portion 41R may protrude rearward from the front bracket 41. A stopper 42S may protrude from an upper side of the mount 42M, and may be located on the rotation trajectory of the first protruding portion 41L and the second protruding portion 41R. The stopper 42S may limit the pivoting of the front bracket 41 as the stopper 42S interferes with the first protruding portion 41L or the second protruding portion 41R. The first protruding portion 41L and the second protruding portion 41R may be spaced 180 degrees apart from each other with respect to the pivot axis of the front bracket 41, and the front bracket 41 may pivot within a range of +90 to - 90 degrees.

During the pivoting of the front bracket 41, a user can feel the engagement when the protrusion 45At is engaged with the fixing hole 45Ga or the slot 45Gb. For example, when the protrusion 45At is drawn out from the slot 45Gb and is inserted into the fixing hole 45Ga, the user can sense that the front bracket 41 is at 0 degree, +90 degrees, or -90 degrees.

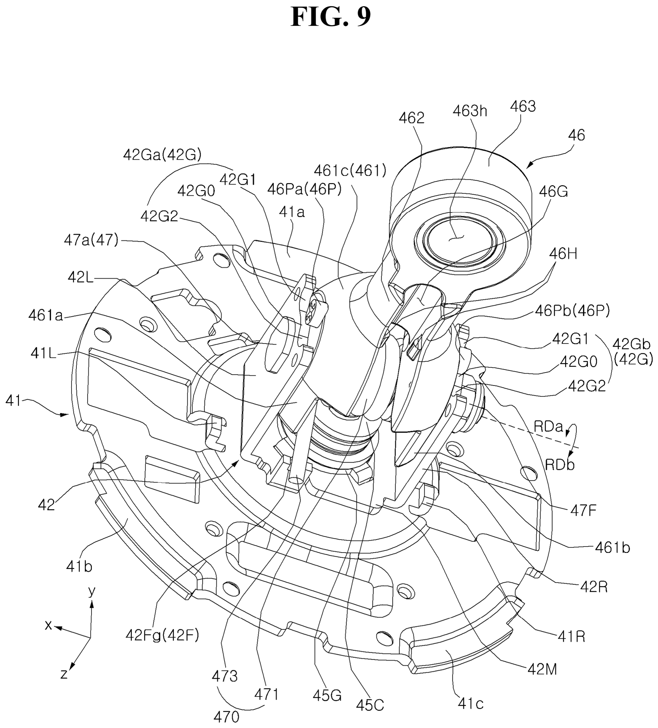

Referring to FIGS. 8 and 9, a holder 46 may be positioned at the rear of the mount 42M of the rear bracket 42. The holder 46 may be disposed between the wings 42L and 42R of the rear bracket 42. The holder 46 may be referred to as an ankle 46, a hand 46, or a grab 46. The holder 46 may include a front part 461, a middle part 462, and a rear part 463. The front part 461, the middle part 462, and the rear part 463 may be formed as one body.

The front part 461 may define a front portion of the holder 46. The front part 461 may be positioned between the wings 42L and 42R of the rear bracket 42. The front part 461 may include a first part 461a, a second part 461b, and a third part 461c. The third part 461c may have a generally hemisphere or bowl shape, and may be open toward the mount 42M. The first part 461a may extend from the third part 461c toward the mount 42M, and may face the first wing 42L. The second part 461b may extend from the third part 461c toward the mount 42M, and may face the second wing 42R.

The middle part 462 may define a middle portion of the holder 46. The middle part 462 may be positioned at the rear of the front part 461. The middle part 462 may extend rearward from the third part 461c of the front part 461. In some embodiments, the middle part 462 may be omitted. In this case, the rear part 463 may be directly coupled to the front part 461.

The rear part 463 may define a rear portion of the holder 46. The rear part 463 may be positioned at the rear of the middle part 462. The rear part 463 may extend rearward from the middle part 462. The rear part 463 may have a generally ring shape. A hole 463H may be formed through a central portion of the rear part 463 in the vertical direction.

A tilt shaft 47 may extend in a direction intersecting the wings 42L and 42R of the rear bracket 42. The tilt shaft 47 may pass through the first wing 42L, the first part 461a, the second part 461b, and the second wing 42R. A head 47a of the tilt shaft 47 may define one end of the tilt shaft 47, and may be inserted into and fixed to a hole 42Lh of the first wing 42L. A portion 47b of the tilt shaft 47 may define the other end of the tilt shaft 47, and may be inserted into and fixed to a hole 42Rh of the second wing 42R. A fastening member 47F such as a nut may be screw-coupled to the portion 47b of the tilt shaft 47 that protrudes from the second wing 42R.

In this case, a circular first hole 461ah may be formed in the first part 461a, and a circular second hole may be formed in the second part 461b. The tilt shaft 47 may pass through the first hole 461ah and the second hole. The tilt shaft 47 and the brackets 41 and 42 coupled thereto may rotate with respect to the holder 46.

An elastic member 470 may be disposed between the first part 461a and the second part 461b of the holder 46. The elastic member 470 may be wound around an outer circumferential surface of the tilt shaft 47 multiple times, and may have elasticity. The elastic member 470 may be a spring in the form of a coil. A coil section 471 of the electric member 470 may be a portion of the elastic member 470 that is wound around the outer circumferential surface of the tilt shaft 47. A support section 472 of the elastic member 470 may extend from one end of the coil section 471 to thereby define one end of the elastic member, and may be supported by the inside of the front part 461 of the holder 46. An engagement section 473 of the elastic member 470 may extend from the other end of the coil section 471 to thereby define the other end of the elastic member 470, and may be supported by the rear bracket 42. A support portion 42F may protrude rearward from a lower side of the mount 42M of the rear bracket 42, and may be adjacent to the first wing 42L. The engagement section 473 may be engaged into a groove 42Fg of the support portion 42F.

A disc spring 470S may be disposed between the elastic member 470 and the second part 461b. The tilt shaft 47 may pass through the disc spring 470S. The disc spring 470S may be convex toward the elastic member 470 or the second part 461b, and may have elasticity. The disc spring 470S may generate an elastic force in an axial direction of the tilt shaft 47. A washer 470W may be disposed between the second part 461b and the second wing 42R, and may have a circular hole through which the tilt shaft 47 passes.

Accordingly, the front bracket 41 and the rear bracket 42 may be rotated together with the tilt shaft 47 and the fastening member 47F (see RDa and RDb in FIG. 9). The tilt shaft 47 may provide a rotation axis for the brackets 41 and 42 with respect to the holder 46. The tilt shaft 47 may provide a tilt axis for the brackets 41 and 42. Due to the elastic force of the disc spring 470S, a tilt angle may be maintained unless a certain level of force is applied to the brackets 41 and 42.

A pin 46P may be fixed to the first part 461a and/or the second part 461b. A first pin 46Pa may protrude from an outer surface of the first part 461a. A second pin 46Pb may protrude from an outer surface of the second part 461b.

A guide groove 42G may be formed in the first wing 42L and/or the second wing 42R. A first guide groove 42Ga may be formed from a rear end of the first wing 42L to the inside of the first wing 42L. A second guide groove 42Gb may be formed from a rear end of the second wing 42R to the inside of the second wing 42R. A first groove 42G1 of the guide groove 42G may be formed by drawing an arc from a reference point 42G0 in a first rotational direction RD1. A second groove 42G of the guide groove 42G may be formed by drawing an arc from a reference point 42G0 in a second rotational direction RDb opposite to the first rotational direction RDa.

Here, the tilt shaft 47 may rotate in the first rotational direction RDa or the second rotational direction RDb. The pin 46P may move relative to the second groove 42G2 during the rotation of the tilt shaft 47 in the first rotational direction RDa. The rotation (or tilting) of the tilt shaft 47 and the brackets 41 and 42 coupled thereto may be restricted as the second groove 42G2 is engaged by the pin 46P. The pin 46P may move relative to the first groove 42G1 during the rotation of the tilt shaft 47 in the second rotational direction RDb. The rotation (or tilting) of the tilt shaft 47 and the brackets 41 and 42 coupled thereto may be restricted as the first groove 42G1 is engaged by the pin 46P.

Accordingly, the brackets 41 and 42 may be tilted up and down within a certain range of angles. For example, the brackets 41 and 42 may be tilted within a range of +25 to -25 degrees.

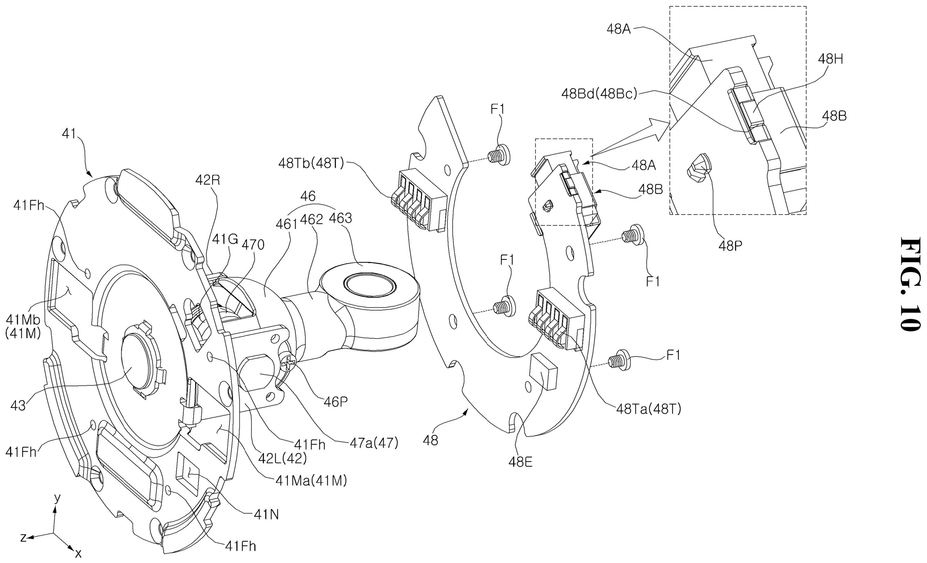

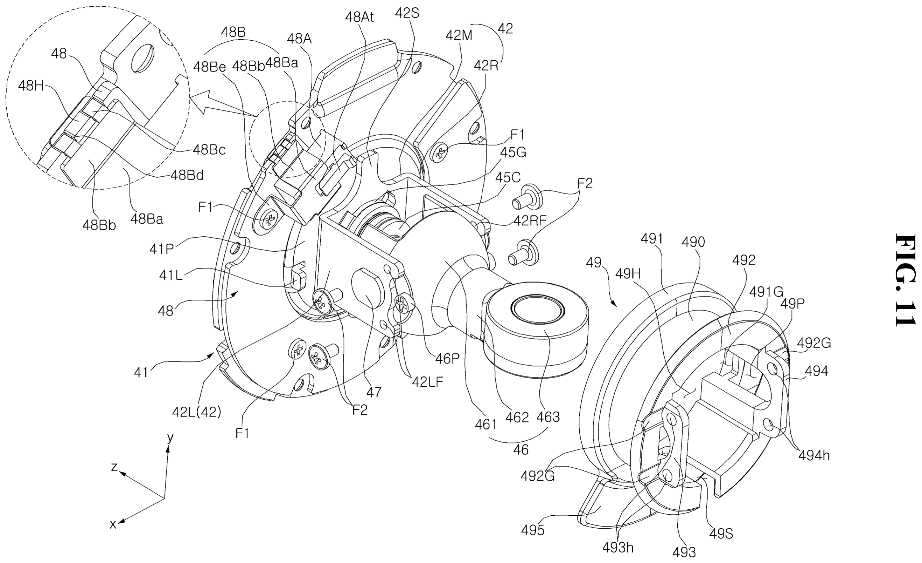

Referring to FIGS. 10 and 11, a substrate 48 may be positioned at the rear of the front bracket 41. The substrate 48 may be referred to as a printed circuit board (PCB) 48 or a board 48. The substrate 48 may have a generally open ring shape. The substrate 48 may have a generally C-shape. The substrate 48 may extend along an edge of the front bracket 41. The substrate 48 may be disposed along the edge of the front bracket 41, and may be positioned on a rear surface of the front bracket 41. A circular pressed portion 41P may be formed at an inner side of the substrate 48.

A fastening member F1 may pass through the substrate 48 and be coupled to a hole 41Fh of the front bracket 41. The fastening member F1 may be a screw. The fastening members F1 coupled to the holes 41Fh may be arranged along the substrate 48. Accordingly, the substrate 48 may be coupled to the rear of the front bracket 41.

A guide protrusion 48P may protrude from a front surface of the substrate 48. The guide protrusion 48P may be adjacent to one end of the substrate 48. The guide protrusion 48P may be inserted into a guide hole 41G of the front bracket 41. The guide protrusion 48P and the guide hole 41G may guide the coupling of the substrate 48 and the front bracket 41.

A terminal 48T may be provided on the front surface of the substrate 48. The terminal 48T may be a convex-shaped pin coupled to the front surface of the substrate 48. The terminal 48T may be mounted on the front surface of the substrate 48, and may be electrically connected to the substrate 48. A first terminal 48Ta may protrude from the front surface of the substrate 48. A second terminal 48Tb may protrude from the front surface of the substrate 48. The first terminal 48Ta and the second terminal 48Tb may be spaced apart from each other. The first terminal 48Ta may be located relatively close to one end of the substrate 48, and the second terminal 48Tb may be located relatively close to the other end of the substrate 48. For example, the first terminal 48Ta and the second terminal 48Tb may be spaced 180 degrees apart from each other with respect to the center of a circle of the substrate 48.

A hole 41M may be formed in the front bracket 41. The terminal 48T may be inserted into the hole 41M. The first terminal 48Ta may pass through a first hole 41Ma. The second terminal 48Tb may pass through a second hole 41Mb. The terminal 48T may be exposed to the front of the front bracket 41.

An element or component 48E may be mounted on the front surface of the substrate 48. The element 48E may protrude from the front surface of the substrate 48. The element 48E may be inserted into a receiving hole 41N of the front bracket 41. Thus, it is possible to prevent the substrate 48 from lifting off the rear surface of the front bracket 41 due to the element 48E.

A cable connector 48A may be electrically connected to the substrate 48. The cable connector 48A may have a terminal electrically connected to the substrate 48. The cable connector 48A may have a generally rectangular block shape. The cable connector 48A may be adjacent to one end of the substrate 48.

The bracket 48B may fix or secure the cable connector 48A to the substrate 48. To this end, the bracket 48B may include a body 48Ba and a leg 48Bb.

The body 48Ba may cover the cable connector 48A. The body 48Ba may be fixed to the cable connector 48A. For example, the cable connector 48A may be fixed to the body 48Ba through a clip 48At with a lever structure.

The leg 48Bb may extend from the body 48Ba, and may be positioned on the substrate 48. A portion 48Bc of the leg 48Bb may be bent to cover an edge of the substrate 48. The portion 48Bc of the leg 48Bb may be referred to as a clip 48Bc. A hole 48Bd may be formed in the portion 48Bc of the leg 48Bb. A protrusion 48H may protrude from a lateral side of the substrate 48, and may be inserted into the hole 48Bd and be caught on the clip 48Bc. The leg 48Bb may be referred to as a first leg 48Bb. A second leg 48Be may extend from the body 48Ba, and may be positioned on the substrate 48. A fastening member F1 may pass through the second leg 48Be and the substrate 48 and be coupled to the hole 41Fh of the front bracket 41.

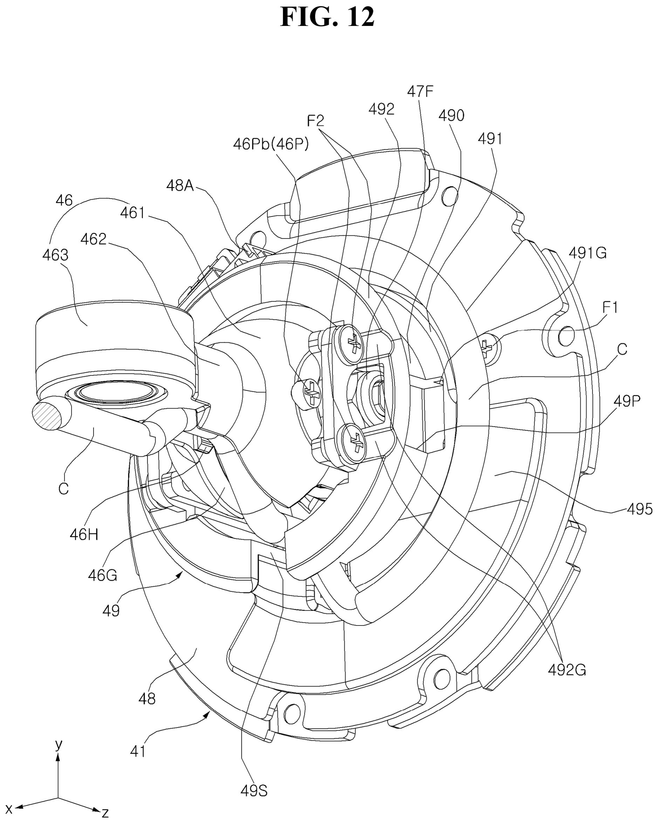

Referring to FIGS. 11 and 12, a cable holder 49 may be positioned at the rear of the substrate 48. The cable holder 49 may surround side surfaces of the rear bracket 42. The wings 42L and 42R of the rear bracket 42 may be positioned in a hollow space 49H of the cable holder 49. The cable holder 49 may be referred to as a cable reel 49 or a cable wheel 49. The cable holder 49 may include a body 490, a first rim 491, and a second rim 492.

The body 490 may have a hollow cylindrical shape. An inner space of the body 490 may define the hollow space 49H of the cable holder 49. A central axis (i.e., a longitudinal axis) of the body 490 may be parallel to the pivot shaft 43 (see FIG. 10). The body 490 may be referred to as a cylinder 490.

The first rim 491 may be adjacent to one end (or a first end) of the body 490. The first rim 491 may protrude from the first end of the body 490 in a radial direction of the body 490. The first rim 491 may protrude from an outer circumferential surface of the body 490, and may extend along a circumferential direction of the body 490. The first rim 491 may be referred to as a front rim 491 or a first wall 491.

The second rim 492 may be adjacent to the other end (or a second end) of the body 490. The second rim 492 may protrude from the second end of the body 490 in the radial direction of the body 490. The second rim 492 may protrude from the outer circumferential surface of the body 490, may extend along the circumferential direction of the body 490. The second rim 492 may be referred to as a rear rim 492 or a second wall 492.

A first coupling portion 493 may protrude rearward from the second rim 492. The first coupling portion 493 may face the first wing 42L of the rear bracket 42. A second fastening member F2 may pass through a hole 493h of the first coupling portion 493 and be fastened to a hole 42Lf of the first wing 42L. The second fastening member F2 may be a screw. A groove 492G corresponding to the travel path of a head of the screw F2 may be formed on a rear surface of the second rim 492.

A second coupling portion 494 may protrude rearward from the second rim 492. The second coupling portion 494 may face the second wing 42R of the rear bracket 42. A second fastening member F2 may pass through a hole 494h of the second coupling portion 494 and be fastened to a hole 42Rf of the second wing 42R. The second fastening member F2 may be a screw. A groove 492G corresponding to the travel path of a head of the screw F2 may be formed on the rear surface of the second rim 492.

Accordingly, the cable holder 49 may be coupled to the rear bracket 42. Meanwhile, the first coupling portion 493 may be spaced apart from the first pin 46Pa while covering the first pin 46Pa. The second coupling portion 494 may be spaced apart from the second pin 46Pb while covering the second pin 46Pb. The first rim 491 may be positioned to correspond to the pressed portion 41P. The protruding portions 41L and 41R (see FIG. 9) may protrude rearward from the pressed portion 41P, and may not be interfered with by the first rim 491. An arcuate or annular groove 491G may be formed on a front surface of the first rim 491, and the protruding portions 41L and 41R may move along the groove 491G in a spaced manner from the groove 491G.

An opening 49P may be formed on a lateral surface of the cable holder 49. The opening 49P may be referred to as a hole 49P. The fastening member 47F may be disposed in the opening 49P.

A slot 49S may be formed on the lateral surface of the cable holder 49. The slot 49S may be formed at a lower portion of the cable holder 49. The slot 49S may be formed by cutting out a portion of the second rim 492 and a portion of the body 490. In addition, a portion of the first rim 491 may be cut out to thereby define a portion of the slot 49S.

A flange 495 may protrude from an edge of the first rim 491 in a radial direction of the cable holder 49. The flange 495 may extend along the first rim 491. The flange 495 may be adjacent to a rear surface of the substrate 48. The flange 495 may be positioned on the rear surface of the substrate 48. A portion of the flange 495 may be formed at a portion of the first rim 491 where the slot 49S is formed. In other words, the slot 49S may be positioned between one end and the other end of the flange 495.

For example, the flange 495 may define a portion of a ring. An angle between one end and the other end of the flange 495 with respect to a central axis of the cable holder 49 may be a right angle (90 degrees) or an obtuse angle. One end of the flange 495 may be adjacent to the slot 49S, and the flange 495 may extend from the one end in the counterclockwise direction.

As another example, the flange 495 may define a ring.

A cable C may be positioned in the slot 49S. The cable C may be engaged with a portion of the cable holder 49 that defines the slot 49S. The cable C may be positioned between the first rim 491 and the second rim 492, and may be disposed along the body 490. The cable C may be routed along the body 490 in the counterclockwise direction, and may be electrically connected to the cable connector 48A. The front bracket 41 and the substrate 48 may rotate with respect to the cable holder 49, and a rotation axis of the front bracket 41 and the substrate 48 may be parallel to a central axis of the pivot shaft 43. In response to the rotation of the substrate 48, the extent to which the cable C is wound around the cable holder 49 may be varied. For example, as the substrate 48 rotates about the pivot shaft 43 in the counterclockwise direction, the cable C may be wound more around the cable holder 49. For example, as the substrate 48 rotates about the pivot shaft 43 in the clockwise direction, the cable C may be unwound from the cable holder 49. For example, the cable C may be wound 0.5 to 1.5 times around the body 490.

The flange 495 may extend along the cable C placed on the body 490. The flange 495 may minimize the cable C from touching the substrate 48.

A cable groove 46G may be formed at a lower portion of the holder 46. The cable groove 46G may be formed at a lower portion of the front part 461 and a lower portion of the middle part 462. A protrusion 46H may protrude from a side wall of the cable groove 46G. One of a pair of protrusions 46H (see FIG. 9) may protrude from a first side wall of the cable groove 46G, and the other may protrude from a second side wall of the cable groove 46G that is opposite the first side wall. The cable C may be inserted into the cable groove 46G, and may be engaged with the protrusion 46H.

Accordingly, the cable C may be routed into the holder 46 and the cable holder 49.

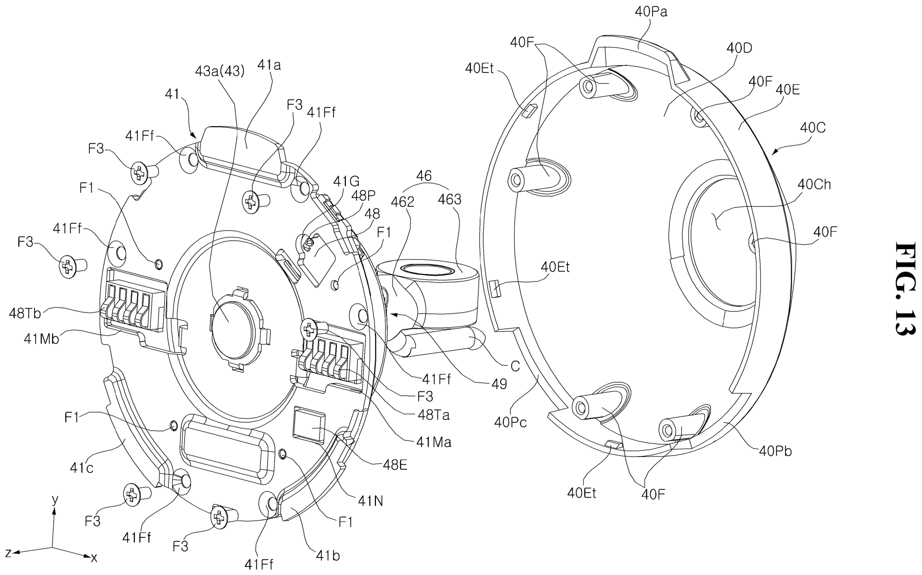

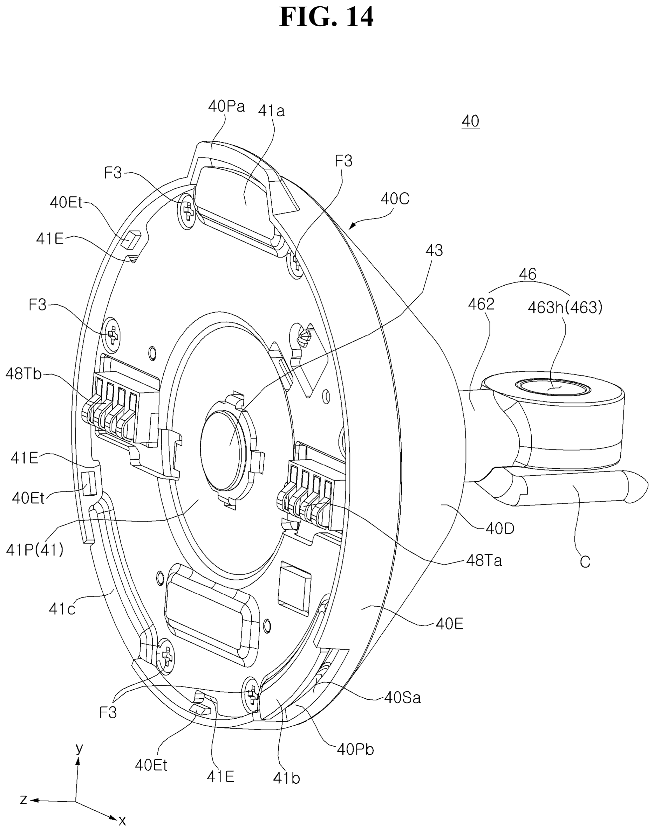

Referring to FIGS. 13 and 14, a cover 40C may be positioned behind the cable holder 49. The cover 40C may have a bowl shape open at the front. A cover hole 40Ch may be formed in the cover 40C, and may be aligned with the holder 46. The holder 46 may pass through the cover hole 40Ch. The middle part 462 and the rear part 463 of the holder 46 may be exposed to the rear of the cover 40C. The cover 40C may include a dome 40D and a side wall 40E.

The dome 40D may be convex rearward. The cover hole 40Ch may be formed in the dome 40D. The dome 40D may cover the front bracket 41, a portion of the holder 46, the substrate 48, the rear of the cable holder 49. A coupling portion 40F may protrude from the inside of the dome 40D toward the front bracket 41. A fastening member F3 may be coupled to the coupling portion 40F through a hole 41Ff of the front bracket 41. The fastening member F3 may be a screw. The holes 41Ff and the fastening members F3 may be arranged along an edge of the front bracket 41. The coupling portions 40F may be arranged along an edge of the cover 40C.

Accordingly, the cover 40C may be coupled to the front bracket 41. The cable C may pass through the cover hole 40Ch.

The side wall 40E may protrude forward from an edge of the dome 40D. The side wall 40E may extend along the edge of the dome 40D. The side wall 40E may cover an edge of the front bracket 41. A protrusion 40Et may be formed on an inner surface of the side wall 40E. A plurality of protrusions 40Et may be arranged along the side wall 40E. The protrusion 40Et may be referred to as a hook 40Et. A groove 41E may be formed at the edge of the front bracket 41, and may be positioned to correspond to the protrusion 40Et.

A protruding portion 40Pa may protrude from an outer surface of the side wall 40E. The protruding portion 40Pa may be formed by being pressed outward from the inner surface of the side wall 40E. The first coupling portion 41a may be positioned to correspond to the protruding portion 40Pa.

A first groove 40Pb may be formed from a front end of the side wall 40E to the inside of the side wall 40E. The second coupling portion 41b may be positioned to correspond to the first groove 40Pb. The second coupling portion 41b may be positioned in front of the first groove 40Pb. A first slot 40Sa may be formed between the second coupling portion 41b and the first groove 40Pb.

A second groove 40Pc may be formed from a front end of the side wall 40E to the inside of the side wall 40E. The third coupling portion 41c may be positioned to correspond to the second groove 40Pc. The third coupling portion 41c may be positioned in front of the second groove 40Pc. A second slot 40Sb may be formed between the third coupling portion 41c and the second groove 40Pc.

Referring to FIG. 14 and FIG. 2, a mount 15M may be recessed from a rear surface of the back cover 15, and the connector 40 may be inserted into the mount 15M. The protruding portion 40Pa of the connector 40 may be inserted into a groove formed in a lateral wall (or side wall) of the mount 15M. Protrusions protruding from the lateral wall of the mount 15M may be inserted into the grooves 40Sa and 40Sb of the connector 40.

Accordingly, the connector 40 may be coupled to the back cover 15 of the display 10. The display 10 may be rotated (pivoted) together with the front bracket 41 of the connector 40.

The terminals 48Ta and 48Tb of the connector 40 may be electrically connected to terminals of the display 10. The terminals 48Ta and 48Tb may be electrically connected to the terminals of the display 10 through holes formed in a bottom of the mount 15M. The terminals of the display 10 may be coupled to or formed on a substrate (i.e., a printed circuit board (PCB)) in the display 10.

For example, the substrate of the display 10 which is electrically connected to the terminals 48Ta and 48Tb may be electrically connected to a battery (not shown) of the display 10. The substrate of the display 10 may be referred to as a battery charger. In this case, the cable C may provide power to the battery of the display 10 through the substrate 48 (see FIG. 12) and the substrate of the display 10. The cable C may be electrically connected to an external power source. The cable C may be disposed along the support arm 50 (see FIG. 2) and the pole 30 (see FIG. 2), and may be electrically connected to the base 20 (see FIG. 2). A power cable connected to the external power source may be detachably connected to the base 20 and electrically connected to the cable C through the base 20.

In this case, when the display 10 is coupled to the connector 40, the battery of the display 10 may be charged. The display 10 separated from the connector 40 may be driven by the power of the battery of the display 10.

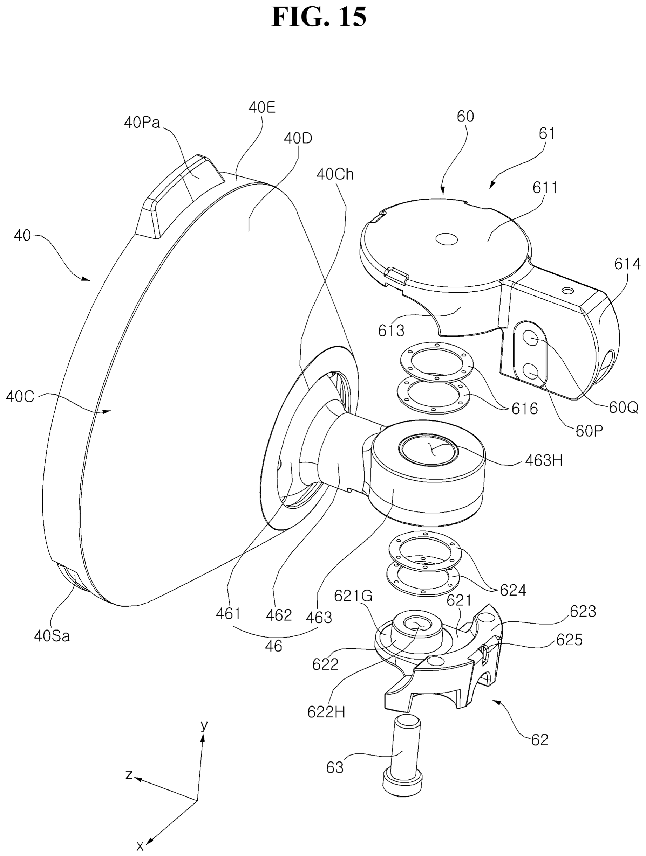

Referring to FIG. 15, a joint 60 may include an upper body 61 and a lower body 62. The joint 60 may be referred to as a front joint 60, an arm joint 60, a first joint 60, a swivel bracket 60, or a bracket 60.

The upper body 61 may be coupled to a top of the rear part 463 of the holder 46. The upper body 61 may be referred to as an upper bracket 61, a top bracket 61, or a first bracket 61.

The lower body 62 may be coupled to a bottom of the rear part 463 of the holder 46. The lower body 62 may be referred to as a lower bracket 62, a bottom bracket 62, or a second bracket 62.

The rear part 463 of the holder 46 may be positioned between the upper body 61 and the lower body 62.

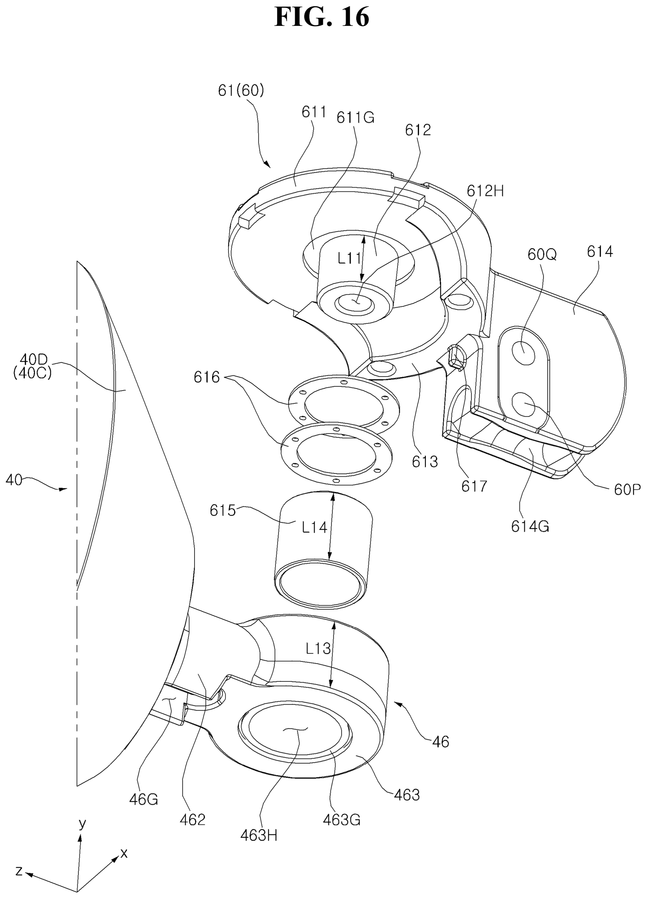

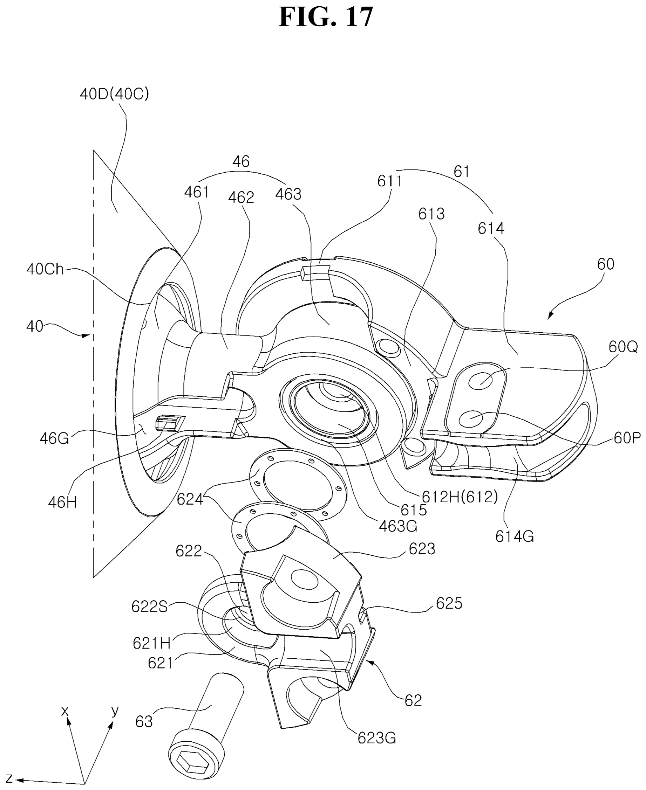

Referring to FIGS. 16 and 17, the upper body 61 may include an upper base 611, an upper pin 612, an upper wall 613, and a coupler 614.

The upper base 611 may define an upper surface of the joint 60. The upper base 611 may have a generally circular plate shape. The upper base 611 may be referred to as a first base 611.

The upper pin 612 may protrude from a lower surface of the upper base 611. The upper pin 612 may have a cylindrical shape. The upper pin 612 may be aligned with the hole 463H of the rear part 463 of the holder 46. An outer diameter of the upper pin 612 may be equal to or less than a diameter of the hole 463H of the rear part 463. A length L11 of the upper pin 612 may be less than a length L13 of the hole 463H of the rear part 463. The upper pin 612 may be inserted into the hole 463H of the rear part 463. The upper pin 612 may be referred to as a first pin 612.

A bushing 615 may be positioned between an outer circumferential surface of the upper pin 612 and an inner surface (i.e., a boundary) of the hole 463H. The bushing 615 may have a hollow cylindrical shape. An outer diameter of the bushing 615 may be equal to or less than the diameter of the hole 463H. An inner diameter of the bushing 615 may be equal to or greater than the outer diameter of the upper pin 612. A length L14 of the bushing 615 may be greater than the length L11 of the upper pin 612. The length L14 of the bushing 615 may be equal to or less than the length L13 of the hole 463H. The upper pin 612 may be inserted into the bushing 615. In some embodiments, the bushing 615 may be omitted.

A washer 616 may be disposed between the rear part 463 and the upper base 611. The upper pin 612 may pass through the washer 616. The washer 616 may be positioned on an upper surface of the rear part 463. A portion of the washer 616 may be positioned on the bushing 615. The washer 616 may be positioned on the lower surface of the upper base 611. A groove 611G may be recessed from the lower surface of the upper base 611, and may extend along the upper pin 612. The washer 616 may be positioned on the groove 611G. One or two or more washers 616 may be provided.

The upper wall 613 may protrude from the lower surface of the upper base 611. The upper wall 613 may extend along a portion of a lateral surface of the rear part 463. The upper wall 613 may cover the portion of the lateral surface of the rear part 463. A lower end of the upper wall 613 may be located at a higher position than a lower surface of the rear part 463. The upper wall 613 may be referred to as a first wall 613.

The coupler 614 may protrude from an outer surface of the upper wall 613. The coupler 614 may extend from the upper wall 613 in a radial direction of the upper wall 613. A lower end of the coupler 614 may be located at a lower position than the lower end of the upper wall 613. The coupler 614 may be referred to as a coupling part 614, a supporter 614, a link bracket 614, or a bracket 614.

A guide protrusion 617 may be adjacent to a boundary between a lower surface of the upper wall 613 and the coupler 614. The guide protrusion 617 may protrude from the lower surface of the upper wall 613 and/or a front surface of the coupler 614.

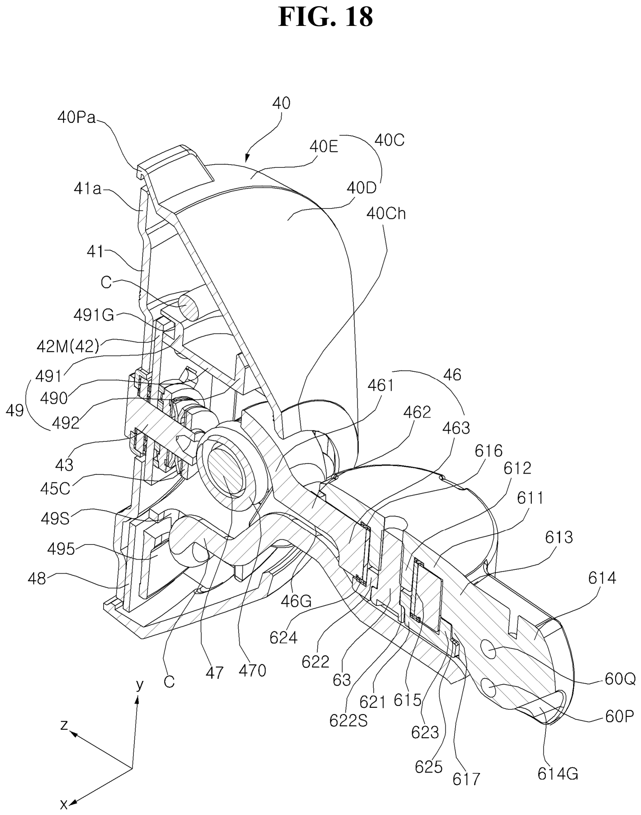

Referring to FIGS. 17 and 18, the lower body 62 may include a lower base 621, a lower pin 622, and a lower wall 623.

The lower base 621 may define a lower surface of the joint 60. The lower base 621 may have a generally ring shape. A through-hole 621H may be formed in the lower base 621. The lower base 621 may be referred to as a second base 621.

The lower pin 622 may protrude from an upper surface of the lower base 621. The lower pin 622 may have a hollow cylindrical shape. A hollow space 622H (see FIG. 15) of the lower pin 622 may be aligned with the through-hole 621H and the hole 463H of the rear part 463. The hollow space 622H may be referred to as a hole 622H. An inner diameter of the lower pin 622 may be less than a diameter of the through-hole 621H. An outer diameter of the lower pin 622 may be equal to or less than the diameter of the hole 463H of the rear part 463. The outer diameter of the lower pin 622 may be equal to or less than the inner diameter of the bushing 615. The lower pin 622 may be inserted into the bushing 615, and may face the upper pin 612. The lower pin 622 may be referred to as a second pin 622.

A washer 624 may be disposed between the lower base 621 and the rear part 463. The lower pin 622 may pass through the washer 624. The washer 624 may be positioned on the upper surface of the lower base 621. A groove 621G (see FIG. 15) may be recessed from the upper surface of the lower base 621, and may extend along the lower pin 622. The washer 624 may be positioned on the groove 621G. The washer 624 may be positioned on the lower surface of the rear part 463. A groove 463G may be recessed from the lower surface of the rear part 463, and may extend along the hole 463H. The washer 624 may be positioned on the groove 463G. A portion of the washer 624 may be positioned on the bushing 615. One or two or more washers 624 may be provided.

The lower wall 623 may protrude from the upper surface of the lower base 621. The lower wall 623 may protrude from a lower surface of the lower base 621. An upper end of the lower wall 623 may be located at a higher position than an upper end of the lower base 621. A lower end of the lower wall 623 may be located at a lower position than a lower end of the lower base 621. The lower wall 623 may extend along a portion of a lateral surface of the rear part 463. The lower wall 623 may cover the portion of the lateral surface of the rear part 463. The lower wall 623 may face the upper wall 613. A flat upper surface of the lower wall 623 and a flat lower surface of the upper wall 613 may be in contact with each other. The lower wall 623 may be referred to as a second wall 623.

A guide groove 625 may be formed on the upper surface of the lower wall 623. The guide protrusion 617 of the upper body 61 may be inserted into the guide groove 625 of the lower body 62. The guide protrusion 617 and the guide groove 625 may guide the coupling of the upper body 61 and the lower body 62. Alternatively, a guide protrusion may protrude from the upper surface of the lower wall 623, and a guide groove into which the guide protrusion is inserted may be formed in the upper wall 613.

A fastening member 63 may pass through the through-hole 621H of the lower base 621 and the hollow space 622H of the lower pin 622 and be coupled to a hole 612H of the upper pin 612. The hole 612H may be referred to as a hollow space 612H of the upper pin 612. The fastening member 63 may be a bolt, a screw, or a rivet. A body of the fastening member 63 may be screw-coupled to an inner surface of the hole 612H of the upper pin 612. A head of the fastening member 63 may be caught on a stepped portion 622S between an inner surface (i.e., a boundary) of the through-hole 621H and an inner circumferential surface of the lower pin 622. The stepped portion 622S may be a lower end of the lower pin 622.

Accordingly, the lower body 62 may be coupled to the upper body 61 by the fastening member 63. The fastening member 63 may press the upper body 61 and the lower body 62 toward the rear part 463 of the holder 46. The rear part 463 of the holder 46 may be sandwiched between the upper body 61 and the lower body 62.

The pins 612 and 622 of the joint 60 may provide a swivel axis for the connector 40 including the holder 46. The holder 46 may be rotated about the pins 612 and 62, namely, be swiveled. Due to frictional forces between the rear part 463 and the bases 611, 621, a force of a predetermined magnitude or greater may be required to rotate the holder 46. Meanwhile, the joint 60 may further include a disc spring to increase a frictional force of the holder 46. The disc spring may include at least one of a first disc spring or a second disc spring.

The first disc spring may be positioned between the upper surface of the rear part 463 and the lower surface of the upper base 611. The upper pin 612 may pass through the first disc spring. The first disc spring may be disposed between the upper surface of the rear part 463 and the washer 616, or may be disposed between the washer 616 and the lower surface of the upper base 611. The first disc spring may be convex upward or downward, and may have elasticity. The first disc spring may generate an elastic force in an axial direction, thereby increasing the frictional force between the rear part 463 and the upper base 611.

The second disc spring may be positioned between the lower surface of the rear part 463 and the upper surface of the lower base 621. The lower pin 622 may pass through the second disc spring. The second disc spring may be disposed between the lower surface of the rear part 463 and the washer 624, or may be disposed between the washer 624 and the upper surface of the lower base 621. The second disc spring may be convex upward or downward, and may have elasticity. The second spring may generate an elastic force in an axial direction, thereby increasing the elastic force between the rear part 463 and the lower base 621.

The rotation of the holder 46 with respect to the pins 612 and 622 may be restricted as the middle part 462 of the holder 46 comes into contact with one end or the other end of the walls 613 and 623. For example, the connector 40 including the holder 46 may be swiveled within a range of +90 to -90 degrees.

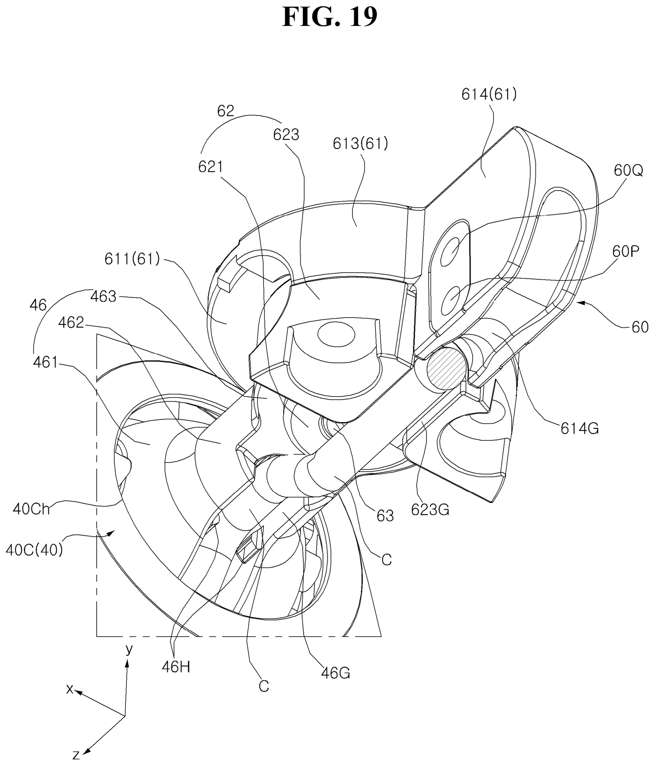

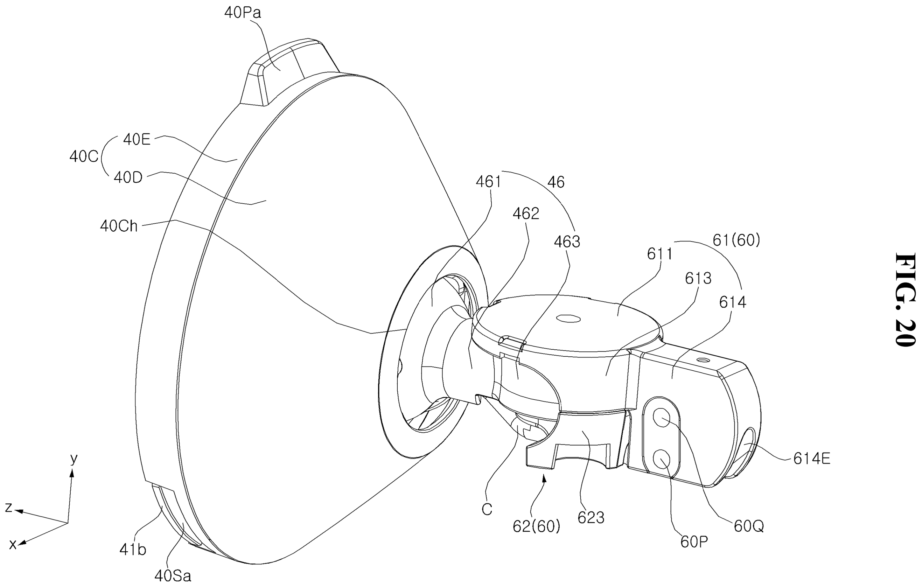

Referring to FIGS. 19 and 20, a cable groove 623G may be formed on a lower surface of the lower wall 623. A cable groove 614G may be formed on a lower surface of the coupler 614.

The cable C positioned in the cable groove 46G of the holder 46 may be positioned in the cable groove 623G of the lower body 62 and the cable groove 614G of the upper body 61. That is, the cable C may be routed into the holder 46 and the joint 60.

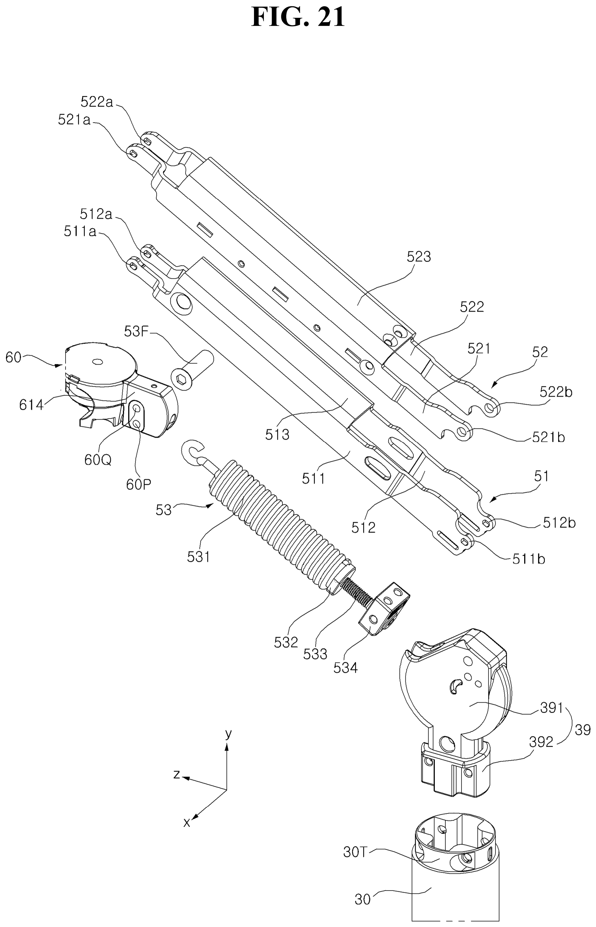

Referring to FIG. 21, the pole 30 may extend in the vertical direction. An arm mount 39 may be coupled to an upper end of the pole 30. The arm mount 39 may be referred to as a link mount 39, a mount 39, a hinge support 39, a bracket 39, or a clip 39.

The support arm 50 may connect the arm mount 39 and the coupler 614. The support arm 50 may extend in a direction intersecting the pole 30. One end (or a first end) of the support arm 50 may be rotatably coupled to the arm mount 39. The other end (or a second end) of the support arm 50 may be rotatably coupled to the coupler 614. The support arm 50 may include a lower arm 51, an upper arm 52, and a supporter 53. The support arm 50 may be referred to as an arm 50 or a link 50. The lower arm 51 and the upper arm 52 may be collectively referred to as an inner arm 50A.

The lower arm 51 may extend along a longitudinal direction of the support arm 50. The lower arm 51 may include a first lower bar 511, a second lower bar 512, and a lower bridge 513. The first lower bar 511 and the second lower bar 512 may extend in a longitudinal direction of the lower arm 51, and may face each other. The first lower bar 511 and the second lower bar 512 may be spaced apart from each other in the horizontal direction. The lower bridge 513 may connect an upper side of the first lower bar 511 and an upper side of the second lower bar 512. The lower arm 51 may include a metal material. The lower arm 51 may be referred to as a first arm 51 or a lower bracket 51.

The upper arm 52 may extend along the lower arm 51. The upper arm 52 may include a first upper bar 521, a second upper bar 522, and an upper bridge 523. The first upper bar 521 and the second upper bar 522 may extend in a longitudinal direction of the upper arm 52, and may face each other. The first upper bar 521 and the second upper bar 522 may be spaced apart from each other in the horizontal direction. The upper bridge 523 may connect an upper side of the first upper bar 521 and an upper side of the second upper bar 522. The upper arm 52 may include a metal material. The upper arm 52 may be referred to as a second arm 52 or an upper bracket 52.

In addition, the upper arm 52 may cover a portion of the lower arm 51. The lower bars 511 and 512 of the lower arm 51 may be positioned between the upper bars 521 and 522 of the upper arm 52. The lower bridge 513 of the lower arm 51 may be positioned under the upper bridge 523 of the upper arm 52.

The supporter 53 may include an elastic member 531 having elasticity. The supporter 53 may be referred to as an elastic module 53 or a spring module 53. The elastic member 531 may be a spring in the form of a coil. The elastic member 531 may extend along the lower arm 51. The elastic member 531 may be stretched or compressed. The elastic member 531 may be disposed between the lower bars 511 and 512 of the lower arm 51.

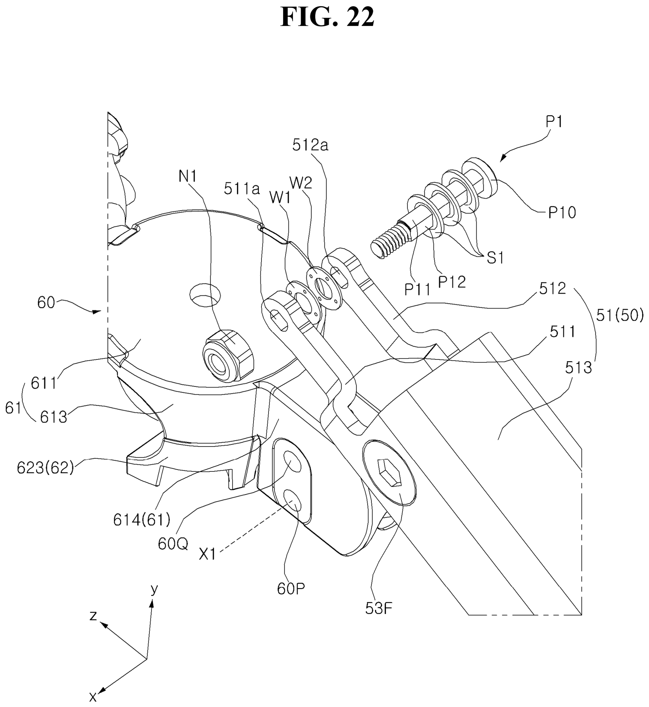

Referring to FIG. 22, the coupler 614 may be positioned between the lower bars 511 and 512 of the lower arm 51. A lower hole 60P and an upper hole 60Q may be formed in the coupler 614. The lower hole 60P may be spaced downward from the upper hole 60Q. The lower hole 60P and the upper hole 60Q may each be a circular hole.

A first hole 511a may be formed in the first lower bar 511 to be adjacent to one end (or a first end) of the first lower bar 511 of the lower arm 51. A first hole 512a may be formed in the second lower bar 512 to be adjacent to one end (or a first end) of the second lower bar 512 of the lower arm 51. The first holes 511a and 512a may each have a boundary with a linear section and a curved section. The first holes 511a and 512a may be aligned with the lower hole 60P (see reference numeral X1).

A first lower pin P1 may extend in a direction intersecting the lower bars 511 and 512. The first lower pin P1 may extend in the horizontal direction. The first lower pin P1 may be a bolt or a rivet. A diameter of a head P10 of the first lower pin P1 may be greater than a diameter of a body of the first lower pin P1. A lateral surface of the body of the first lower pin P1 may include a curved surface P11 and a flat surface P12. A cross-section of the body of the first lower pin P1 may have the same shape as the first holes 511a and 512a. The first lower pin P1 may pass through the first hole 512a, the lower hole 60P, and the first hole 511a.

A first lower fixer N1 may be coupled to the first lower pin P1, and may be opposite the head P10 of the first lower pin P1. The first lower fixer N1 may be a nut. A first washer W1 may be disposed between the first lower bar 511 and the coupler 614, and may have a circular hole through which the first lower pin P1 passes. A second washer W2 may be disposed between the second lower bar 512 and the coupler 614, and may have a circular hole through which the first lower pin P1 passes.

The joint 60 may rotate with respect to the first lower pin P1 fixed to the lower arm 51. Due to a frictional force between the coupler 614 of the joint 60 and the lower arm 51, a force of a predetermined magnitude or greater may be required to rotate the joint 60. A disc spring S1 may be disposed between the head P10 of the first lower pin P1 and the second lower bar 512, or may be disposed between the first lower fixer N1 and the first lower bar 511. The first lower pin P1 may pass through the disc spring S1. The disc spring S1 may be convex toward the head P10 of the first lower pin P1 or the first lower fixer N1, and may have elasticity. The disc spring S1 may generate an elastic force in an axial direction, thereby increasing the frictional force between the coupler 614 and the lower arm 51.

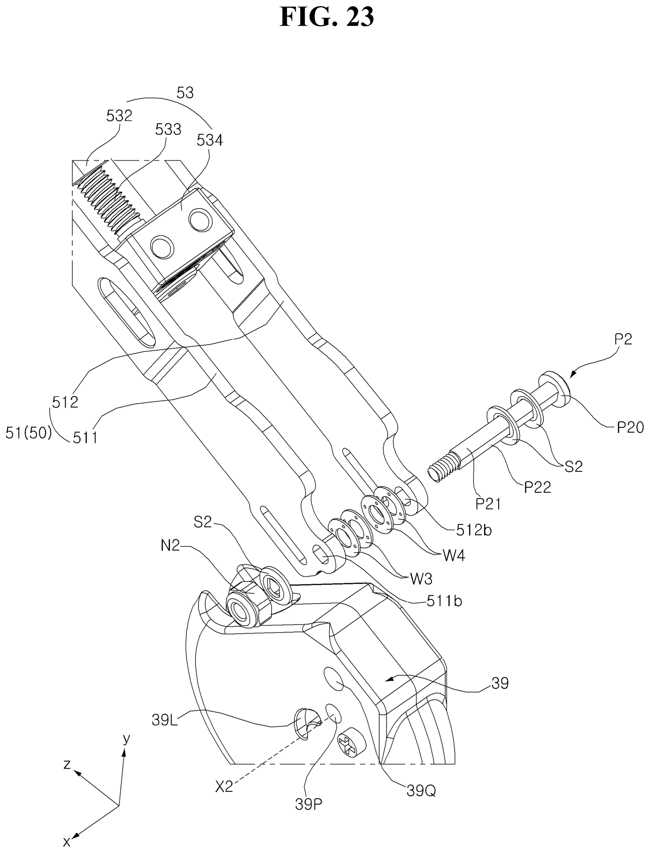

Referring to FIG. 23, the arm mount 39 may be positioned between the lower bars 511 and 512 of the lower arm 51. A lower hole 39P and an upper hole 39Q may be formed in the arm mount 39. The lower hole 39P may be spaced downward from the upper hole 39Q. The lower hole 39P and the upper hole 39Q may each be a circular hole.

A second hole 511b may be formed in the first lower bar 511 to be adjacent to the other end (or a second end) of the first lower bar 511 of the lower arm 51. A second hole 512b may be formed in the second lower bar 512 to be adjacent to the other end (or a second end) of the second lower bar 512. The second holes 511b and 512b may each have a boundary with a linear section and a curved section. The second holes 511b and 512b may be aligned with the lower hole 39P (see reference numeral X2).

A second lower pin P2 may extend in a direction intersecting the lower bars 511 and 512. The second lower pin P2 may extend in the horizontal direction. The second lower pin P2 may be a bolt or a rivet. A diameter of a head P20 of the second lower pin P2 may be greater than a diameter of a body of the second lower pin P2. A lateral surface of the body of the second lower pin P2 may include a curved surface P21 and a flat surface P22. A cross-section of the body of the second lower pin P2 may have the same shape as the second holes 511b and 512b. The second lower pin P2 may pass through the second hole 512b, the lower hole 39P, and the second hole 511b.

A second lower fixer N2 may be coupled to the second lower pin P2, and may be opposite the head P20 of the second lower pin P2. The second lower fixer N2 may be a nut. A first washer W3 may be disposed between the first lower bar 511 and the arm mount 39, and may have a circular hole through which the second lower pin P2 passes. A second washer W4 may be disposed between the second lower bar 512 and the arm mount 39, and may have a circular hole through which the second lower pin P2 passes.

The lower arm 51 may rotate with respect to the arm mount 39. The second lower pin P2 fixed to the lower arm 51 may be parallel to the axis of rotation of the lower arm 51. Due to a frictional force between the lower arm 51 and the arm mount 39, a force of a predetermined magnitude or greater may be required to rotate the lower arm 51. A disc spring S2 may be disposed between the head P20 of the second lower pin P2 and the second lower bar 512, or may be disposed between the second lower fixer N2 and the first lower bar 511. The second lower pin P2 may pass through the disc spring S2. The disc spring S2 may be convex toward the head P20 of the second lower pin P2 or the second lower fixer N2, and may have elasticity. The disc spring S2 may generate an elastic force in an axial direction, thereby increasing the frictional force between the lower arm 51 and the arm mount 39.

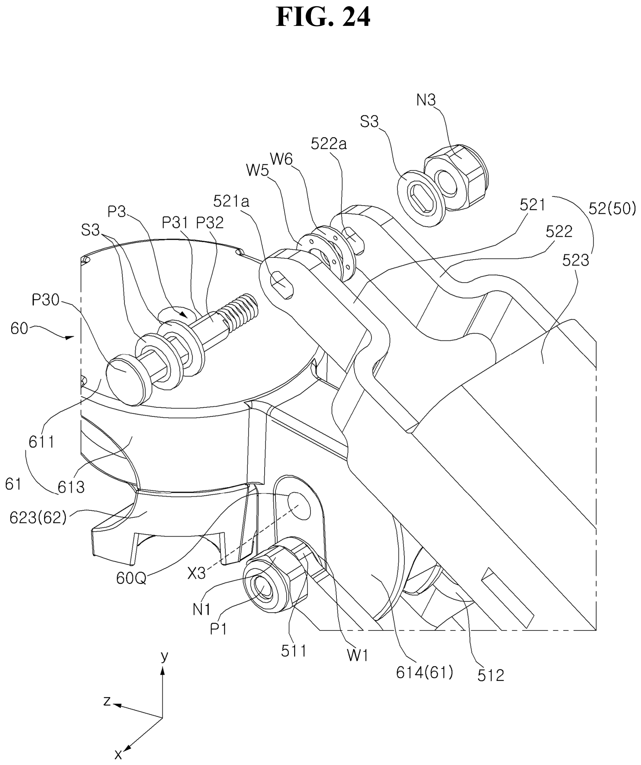

Referring to FIG. 24, the coupler 614 may be disposed between the upper bars 521 and 522 of the upper arm 52.

A first hole 521a may be formed in the first upper bar 521 to be adjacent to one end (or a first end) of the first upper bar 521 of the upper arm 52. A first hole 522a may be formed in the second upper bar 522 to be adjacent to one end (or a first end) of the second upper bar 522 of the upper arm 52. The first holes 521a and 522a may each have a boundary with a linear section and a curved section. The first holes 521a and 522a may be aligned with the upper hole 60Q (see reference numeral X3).

A first upper pin P3 may extend in a direction intersecting the upper bars 521 and 522. The first upper pin P3 may extend in the horizontal direction. The first upper pin P3 may be a bolt or a rivet. A diameter of a head P30 of the first upper pin P3 may be greater than a diameter of a body of the first upper pin P3. A lateral surface of the body of the first upper pin P3 may include a curved surface P31 and a flat surface P32. A cross-section of the body of the first upper pin P3 may have the same shape as the first holes 521a and 522a. The first upper pin P3 may pass through the first hole 521a, the upper hole 60Q, and the first hole 522a.

A first upper fixer N3 may be coupled to the first upper pin P3, and may be opposite the head P30 of the first upper pin P3. The first upper fixer N3 may be a nut. A first washer W5 may be disposed between the first upper bar 521 and the coupler 614, and may have a circular hole through which the first upper pin P3 passes. A second washer W6 may be disposed between the second upper bar 522 and the coupler 614, and may have a circular hole through which the first upper pin P3 passes.

The joint 60 may rotate with respect to the first upper pin P3 fixed to the upper arm 52. Due to a frictional force between the coupler 614 of the joint 60 and the upper arm 52, a force of a predetermined magnitude or greater may be required to rotate the joint 60. A disc spring S3 may be disposed between the head P30 of the first upper pin P3 and the first upper bar 521, or may be disposed between the first upper fixer N3 and the second upper bar 522. The first upper pin P3 may pass through the disc spring S3. The disc spring S3 may be convex toward the head P30 of the first upper pin P3 or the first upper fixer N3, and may have elasticity. The disc spring S3 may generate an elastic force in an axial direction, thereby increasing the frictional force between the coupler 614 and the upper arm 52.

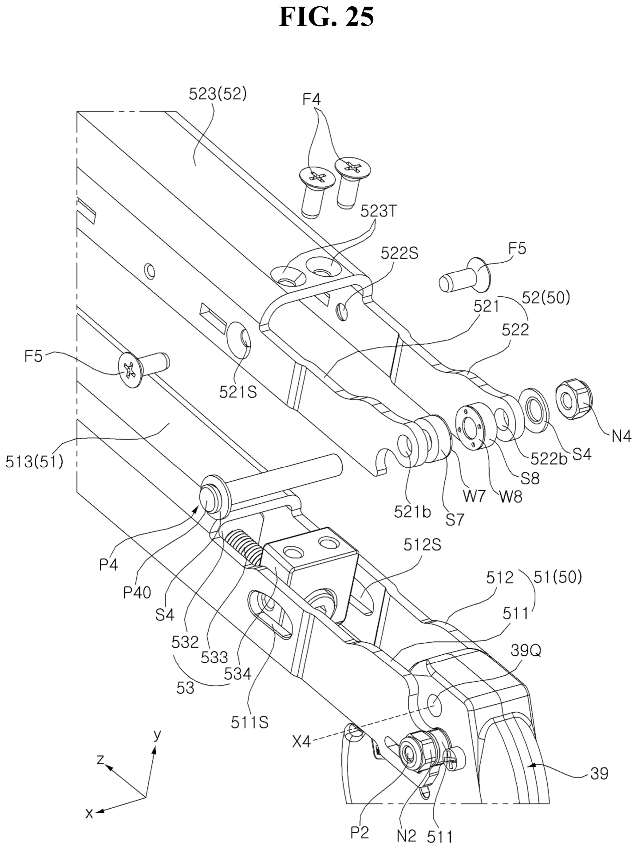

Referring to FIG. 25, the arm mount 39 may be positioned between the upper bars 521 and 522 of the upper arm 52.

A second hole 521b may be formed in the first upper bar 521 to be adjacent to the other end (or a second end) of the first upper bar 521 of the upper arm 52. A second hole 522b may be formed in the second upper bar 522 to be adjacent to the other end (or a second end) of the second upper bar 522 of the upper arm 52. The second holes 521b and 522b may each be a circular hole. The second holes 521b and 522b may be aligned with the upper hole 39Q (see reference numeral X4).

A second upper pin P4 may extend in a direction intersecting the upper bars 521 and 522. The second upper pin P4 may extend in the horizontal direction. The second upper pin P4 may be a bolt or a rivet. A diameter of a head P40 of the second upper pin P4 may be greater than a diameter of a body of the second upper pin P4. A cross-section of the body of the second upper pin P4 may have the same shape as the second holes 521b and 522b. The second upper pin P4 may pass through the second hole 521b, the upper hole 39Q, and the second hole 522b.

A second upper fixer N4 may be coupled to the second upper pin P4, and may be opposite the head P40 of the second upper pin P4. The second upper fixer N4 may be a nut. A first washer W7 may be disposed between the first upper bar 521 and the arm mount 39, and the second upper pin P4 may pass through the first washer W7. A first spacer S7 may be disposed between the first upper bar 521 and the first washer W7, and the second upper pin P4 may pass through the first spacer S7. A second washer W8 may be disposed between the second upper bar 522 and the arm mount 39, and the second upper pin P4 may pass through the second washer W8. A second spacer S8 may be disposed between the second upper bar 522 and the second washer W8, and the second upper pin P4 may pass through the second spacer S8.

The upper arm 52 may rotate with respect to the arm mount 39. The upper arm 52 may rotate about the second upper pin P4. Due to a frictional force between the upper arm 52 and the arm mount 39, a force of a predetermined magnitude or greater may be required to rotate the upper arm 52. A disc spring S4 may be disposed between the head P40 of the second upper pin P4 and the first upper bar 521, or may be disposed between the second upper fixer N4 and the second upper bar 522. The second upper pin P4 may pass through the disc spring S4. The disc spring S4 may be convex toward the head P40 of the second upper pin P4 or the second upper fixer N4, and may have elasticity. The disc spring S4 may generate an elastic force in an axial direction, thereby increasing the frictional force between the upper arm 52 and the arm mount 39.

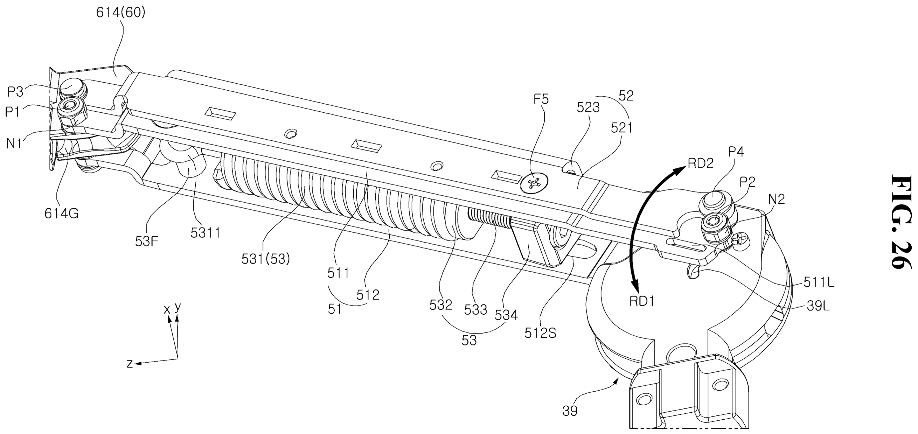

Referring to FIGS. 25 and 26, the supporter 53 may include an elastic member 531, a stopper 532, a shaft 533, and a block 534.

The elastic member 531 may be disposed between the lower bars 511 and 512 of the lower arm 51. The elastic member 531 may be a spring in the form of a coil. A fixer 53F may be adjacent to one end (or a first end) of the lower arm 51, and may extend in a direction intersecting the lower bars 511 and 512. The fixer 53F may be fixed to the lower bars 511 and 512. A portion 5311 of the elastic member 531 may have a hook shape, and may be engaged with the fixer 53F. That is, one end (or a first end) of the elastic member 531 may be fixed to the fixer 53F.

The stopper 532 may be disposed opposite the fixer 53F with respect to the elastic member 531. The other end (or a second end) of the elastic member 531 may be positioned on the stopper 532. The stopper 532 may support the second end of the elastic member 531. The elastic member 531 between the fixer 53F and the stopper 532 may be compressed or stretched.

The shaft 533 may extend from the stopper 532 in a direction intersecting the stopper 532. The shaft 533 may be positioned outside the elastic member 531.

The block 534 may be coupled to an end of the shaft 533. The block 534 may be connected to the stopper 532 by the shaft 533. The block 534 may be disposed between the lower bars 511 and 512 of the lower arm 51, and may not to be covered by the lower bridge 513. The upper bridge 523 of the upper arm 52 may cover the block 534.

A fastening member F4 may pass through a top hole 523T of the upper bridge 523 and be coupled to the block 534. The fastening member F4 may be a screw. Accordingly, the block 534 may be fixed to the upper arm 52.

Fastening members F5 may pass through side holes 521S, 522S of the upper bars 521, 522 and slots 511S, 512S of the lower bars 511, 512 and be coupled to the block 534. The fastening members F5 and the block 534 may be movable along the slots 511S and 512S. Accordingly, the block 534 may be movably coupled to the lower arm 51.

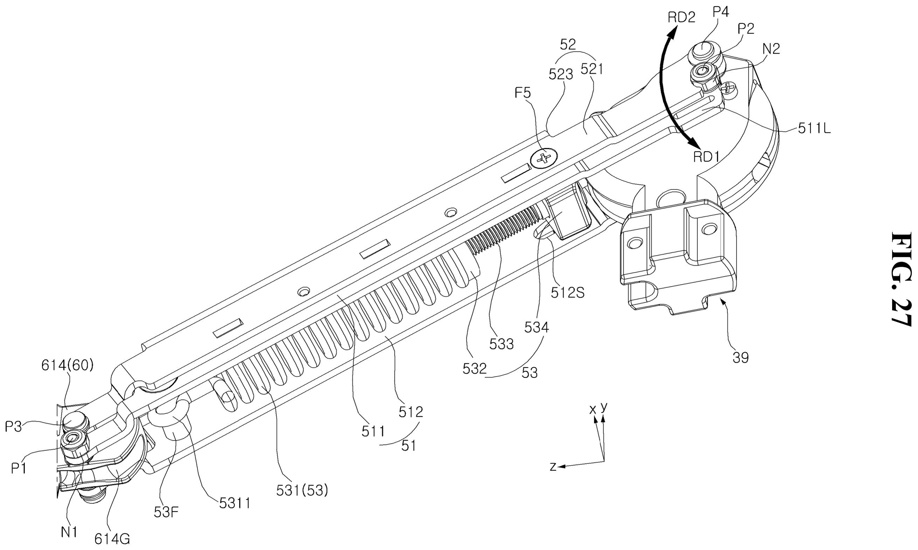

Referring to FIGS. 26 and 27, the support arm 50 may rotate with respect to the arm mount 39. The rotation of the support arm 50 with respect to the arm mount 39 may be referred to as tilting of the support arm 50. The coupler 614 of the joint 60 may rotate with respect to the support arm 50.

The lower arm 51 may rotate about an axis parallel to the second lower pin P2. The upper arm 52 may rotate about an axis parallel to the second upper pin P4. The joint 60 may rotate about an axis parallel to the first lower pin P1. The joint 60 may rotate about an axis parallel to the first upper pin P3.

A length of the elastic member 531 of the supporter 53 may be varied according to the rotation (tilting) of the support arm 50. The supporter 53 may provide a force that can offset the moment acting on the support arm 50 from the joint 60.

For example, referring to FIG. 26 and FIG. 27 in order, the support arm 50 may rotate in a first rotational direction RD1. That is, the support arm 50 may be tilted downward. In response to this, the block 534 may move rearward along the slot 512S. In this case, the stopper 532 may move rearward together with the block 534, and the elastic member 531 may be elastically deformed to be stretched (extended). The support arm 50 may remain tilted downward by the force provided by the elastic member 531.

For example, referring to FIG. 26 and FIG. 27 in reverse order, the support arm 50 may rotate in a second rotational direction RD2. That is, the support arm 50 may be tilted upward. In response to this, the block 534 may move forward along the slot 512S. In this case, the stoper 532 may move forward together with the block 534, and the elastic member 531 may be elastically restored. The support arm 50 may remain tilted upward by the force provided by the elastic member 531.

The lower arm 51, the upper arm 52, and the pins P1, P2, P3, P4 may be a four-bar linkage that connects the joint 60 and the arm mount 39. For example, a distance between a central axis of the first lower pin P1 and a central axis of the first upper pin P3 may be equal to a distance between a central axis of the second lower pin P2 and a central axis of the second upper pin P4. In this case, regardless of the tilted angle of the support arm 50, the angle of the joint 39 with respect to the arm mount 39 may remain constant. For example, the angle of the joint 60 may be an angle between a vertical axis passing through a center of the arm mount 39 and an upper surface of the coupler 614 of the joint 60. Accordingly, the angle of the display 10 coupled to the joint 60 may also remain constant.

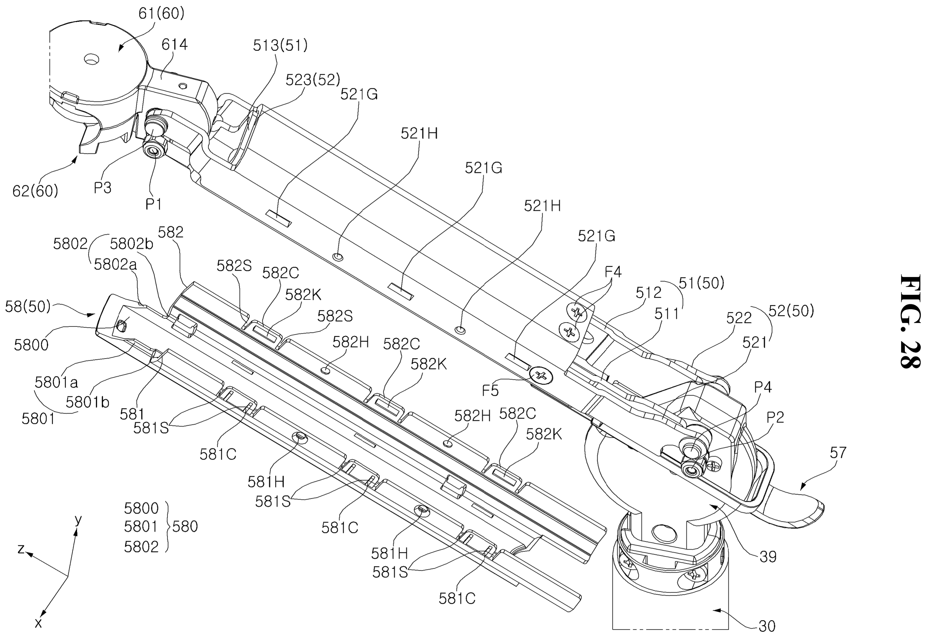

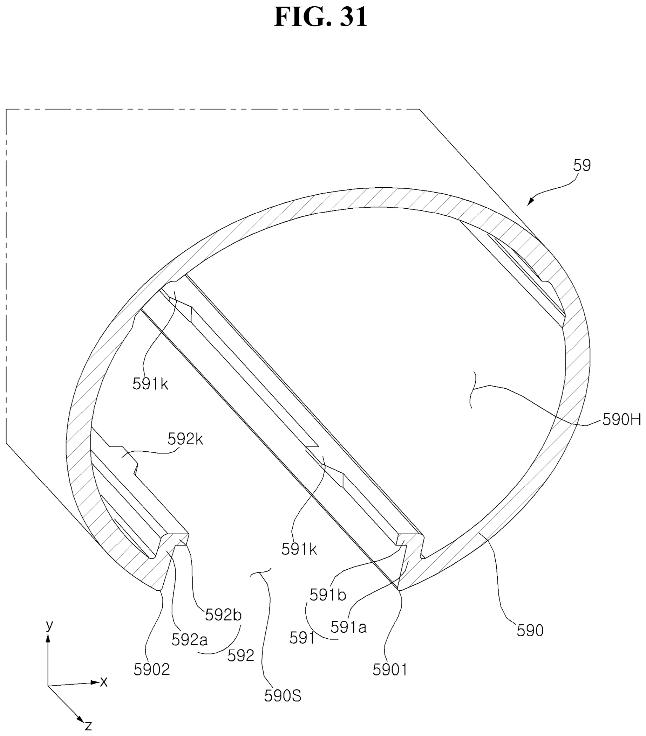

Referring to FIGS. 28 to 30, an arm cover 50C of the support arm 50 may extend along the lower arm 51 and the upper arm 52. The arm cover 50C may include a bottom cover 58 and a top cover 59 (see FIG. 31).

The bottom cover 58 may be positioned under the lower arm 51. The bottom cover 58 may extend along the lower arm 51. The bottom cover 58 may include a base 580, a first side part 581, and a second side part 582. The first side part 581 may be referred to as a first rib 581, and a second side part 582 may be referred to as a second rib 582.

The base 580 may be disposed along the lower bars 511 and 512 of the lower arm 51. A bottom 5800 of the base 580 may define a bottom of the base 580, and may face the supporter 53 in the lower arm 51. Side walls 5801 and 5802 of the base 580 may protrude from long sides of the bottom 5800 toward the lower bars 511 and 512 of the lower arm 51. A first side wall 5801 may protrude from a first long side (i.e., a left side) of the bottom 5800 toward the first lower bar 511. The first side wall 5801 may include a first vertical part 5801a that intersects the bottom 5800, and a first horizontal part 5801b that intersects the first vertical part 5801a. A second side wall 5802 may protrude from a second long side (i.e., a right side) of the bottom 5800 toward the second lower bar 512. The second side wall 5802 may include a second vertical part 5802a that intersects the bottom 5800, and a second horizontal part 5802b that intersects the second vertical part 5802a.

The first side part 581 may be bent from the base 580, and may face an outer surface of the first upper bar 521 of the upper arm 52. The first side part 581 may intersect the first horizontal part 5801b of the first side wall 5801, and may extend along the first horizontal part 5801b. A hook 581K may protrude from an inner surface of the first side part 581. A region of the first side part 581 where the hook 581K is formed may be referred to as a coupling portion 581C. A pair of slits 581S may be formed in the first side part 581, and the coupling portion 581C may be formed between the pair of slits 581S. A plurality of coupling portions 581C may be arranged along the first upper bar 521. A through-hole 581H may be formed in the first side part 581, and may be spaced apart from the coupling portion 581C. The through-holes 581H and the coupling portions 581C may be arranged alternatively.

The second side part 582 may be bent from the base 580, and may face an outer surface of the second upper bar 522 of the upper arm 52. The second side part 582 may intersect the second horizontal part 5802b of the second side wall 5802, and may extend along the second horizontal part 5802b. A hook 582K may protrude from an inner surface of the second side part 582. A region of the second side part 582 where the hook 582K is formed may be referred to as a coupling portion 582C. A pair of slits 582S may be formed in the second side part 582, and the coupling portion 582C may be formed between the pair of slits 582S. A plurality of coupling portions 582C may be arranged along the second upper bar 522. A through-hole 582H may be formed in the second side part 582, and may be spaced apart from the coupling portion 582C. The through-holes 582H and the coupling portions 582C may be arranged alternatively.

An insertion groove 521G or an insertion hole 521G may be formed in the first upper bar 521. The hook 581K of the first side part 581 may be hooked into the insertion hole 521G. Likewise, an insertion groove or an insertion hole may be formed in the second upper bar 522, and may be aligned with the hook 582K of the second side part 582. The hook 582K may be hooked into the insertion hole. Accordingly, the bottom cover 58 may be coupled to the upper arm 52.

A fixing hole 521H may be formed in the first upper bar 521. A fastening member such as a screw may pass through the through-hole 581H of the first side part 581 and be coupled to the fixing hole 521H. Likewise, a fixing hole may be formed in the second upper bar 522. A fastening member such as a screw may pass through the through-hole 582H of the second side part 582 and be coupled to the fixing hole. Accordingly, the bottom cover 58 may be coupled to the upper arm 52.

Referring to FIG. 31 along with FIG. 28, a top cover 59 may be positioned over the upper arm 52. The top cover 59 may extend along the upper arm 52. The top cover 59 may include a body 590, a first rib 591, and a second rib 592.

The body 590 may be disposed along the upper bars 521 and 522 of the upper arm 52. The body 590 may have a generally hollow cylindrical shape with one open end. A slot 590S may be formed on a lateral surface of the body 590. The body 590 may be referred to as a sleeve 590.

The first rib 591 may protrude to the inside of the body 590 from a first side 5901 of the body 590 that defines the slot 590S, and may extend along the first side 5901. The first rib 591 may include a first vertical part 591a that intersects the body 590, and a first horizontal part 591b that intersects the first vertical part 591a. A hook 591K may protrude from the first horizontal part 591b. A plurality of hooks 591K may be arranged along the first horizontal part 591b.

The second rib 592 may protrude to the inside of the body 590 from a second side 5902 of the body 590 that defines the slot 590S, and may extend along the second side 5902. The second rib 592 may include a second vertical part 592a that intersects the body 590, and a second horizontal part 592b that intersects the second vertical part 592a. A hook 592K may protrude from the second horizontal part 592b. A plurality of hooks 592K may be arranged along the second horizontal part 592b.

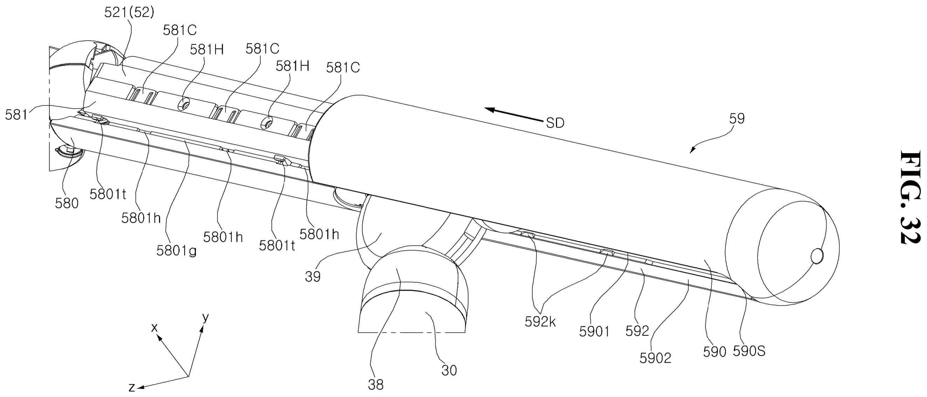

Referring to FIGS. 32 to 34, the top cover 59 may cover a portion of the bottom cover 58. A portion of the bottom cover 58 and a portion of the support arm 50 may be inserted into a hollow space 590H of the body 590. The top cover 59 may slide along the bottom cover 58 to be coupled to the bottom cover 58 (see an arrow SD in FIG. 32).

A first guide groove 5801g may be formed on an outer surface of the first vertical part 5801a of the bottom cover 58, and may extend along the first vertical part 5801a. A first guide protrusion 5801t may protrude from a bottom of the first horizontal part 5801b of the bottom cover 58, and may face the first vertical part 5801a. The first guide protrusions 5801t may be arranged along the first horizontal part 5801b. The first rib 591 of the top cover 59 may be positioned between the first vertical part 5801a and the first guide protrusion 5801t. The first horizontal part 591b of the first rib 591 may be positioned in the first guide groove 5801g. The first rib 591 may be caught on a lower side wall of the first guide groove 5801g.

A second guide groove 5802g may be formed on an outer surface of the second vertical part 5802a of the bottom cover 58, and may extend along the second vertical part 5802a. A second guide protrusion 5802t may protrude from a bottom of the second horizontal part 5802b of the bottom cover 58, and may face the second vertical part 5802a. The second guide protrusions 5802t may be arranged along the second horizontal part 5802b. The second rib 592 of the top cover 59 may be positioned between the second vertical part 5802a and the second guide protrusion 5802t. The second horizontal part 592b of the second rib 592 may be positioned in the second guide groove 5802g. The second rib 592 may be caught on a lower side wall of the second guide groove 5802g.

Accordingly, the guide grooves 5801g and 5802g of the bottom cover 58 may guide slide movement of the top cover 59.

An insertion groove 5801h or an insertion hole 5801h may be formed on the outer surface of the first vertical part 5801a of the bottom cover 58. The insertion hole 5801h may be formed through the first guide groove 5801g. The hook 591K of the top cover 59 may be hooked into the insertion hole 5801h. Likewise, an insertion groove or an insertion hole may be formed on the outer surface of the second vertical part 5802a. The insertion hole may be formed through the second guide groove 5802g. The hook 592K of the top cover 59 may be hooked into the insertion hole. Accordingly, the top cover 59 may be coupled to the bottom cover 58.

The first side 5901 of the top cover 59 may be disposed parallel to the first long side of the bottom 5800 of the bottom cover 58. The second long side 5902 of the top cover 59 may be disposed parallel to the second long side of the bottom 5800 of the bottom cover 58. Accordingly, the bottom 5800 of the bottom cover 58 may be exposed to the outside. An outer surface of the top cover 59 and an outer surface of the bottom 5800 may define an outer surface of a cylinder. With respect to the center of a cross-section of the cylinder, the top cover 59 may be formed to be greater than a semicircle, and the bottom 5900 may be formed to be smaller than a semicircle. When viewed from the side of the arm cover 50C, a boundary line between the top cover 59 and the bottom 5800 may not be visible.

The cable C may be positioned between the base 580 of the bottom cover 58 and the elastic member 531. The cable C may be routed on the bottom 5800 of the base 580.

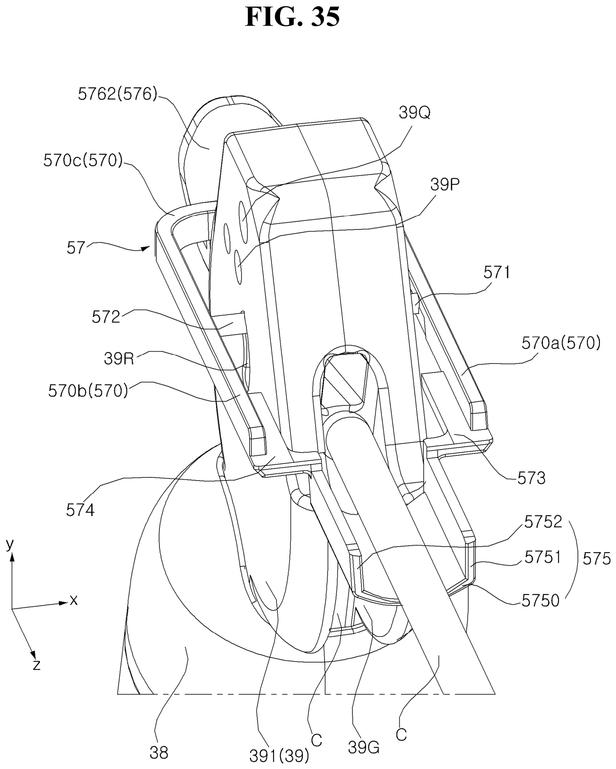

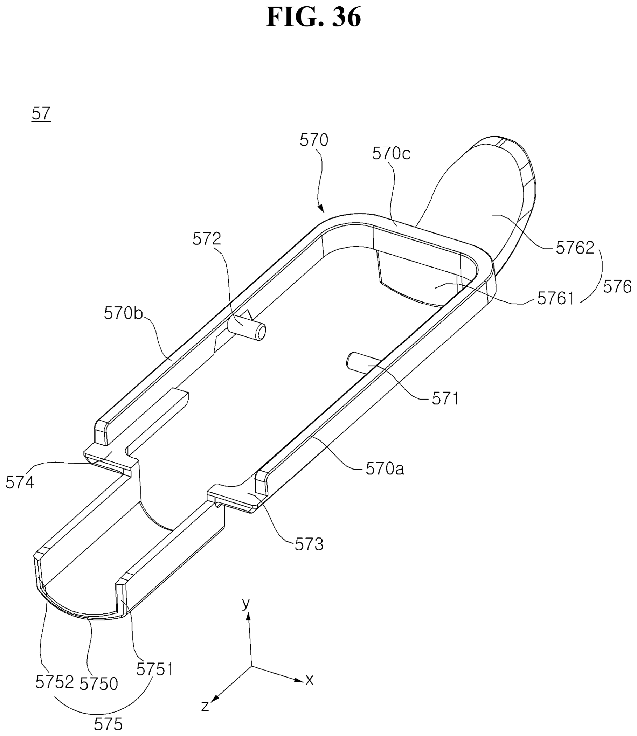

Referring to FIGS. 35 and 36, the arm mount 39 may include a head 391 and a body 392.

The head 391 may define an upper portion of the arm mount 39. The head 391 may have a generally coin shape. A thickness direction of the head 391 may be defined in the horizontal direction. The lower hole 39P and the upper hole 39Q may be formed in the head 391.

The body 392 may define a lower portion of the arm mount 39. The body 392 may have a generally block shape.

A cable groove 39G may be formed at a front portion of the head 391 and a front portion of the body 392. An upper groove 391G may be formed on a circumferential surface of the head 391. A lower groove 392G may be formed on a front surface of the body 392. The cable C may be positioned in the cable groove 39G.

A shield 57 may include a frame 570, a first pin 571, a second pin 572, a first armrest 573, a second armrest 574, a first cover 575, and a second cover 576.

The frame 570 may extend along sides or side surfaces of the head 391. The frame 570 may have a generally U-shape. The frame 570 may include a first part 570a, a second part 570b, and a third part 570c. The first part 570a may be adjacent to a left surface of the head 391. The first part 570a may be parallel to the left surface of the head 391. The second part 570b may be adjacent to a right surface of the head 391. The second part 570b may be parallel to the right surface of the head 391. The third part 570c may connect the first part 570a and the second part 570b. The third part 570c may be positioned at the rear of the head 391.

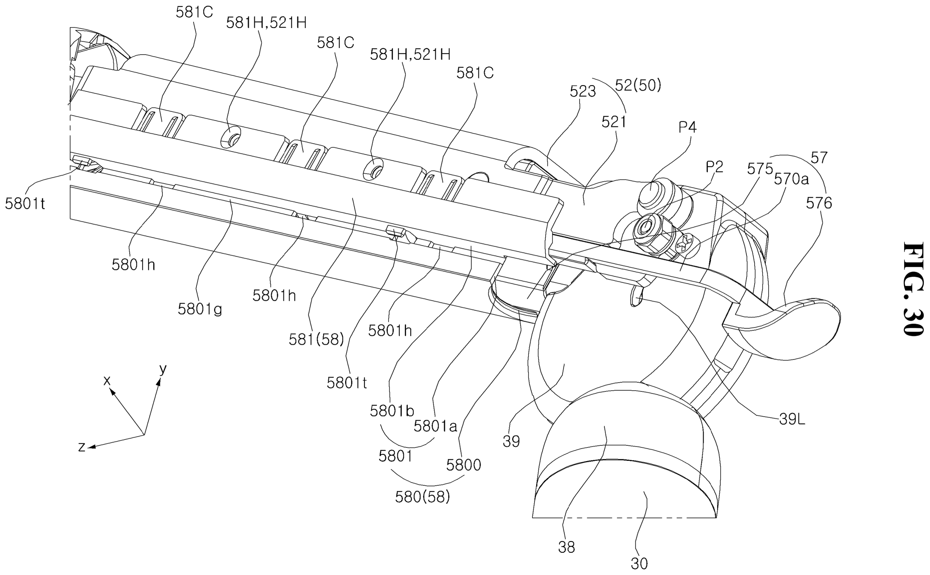

The first pin 571 may protrude from the inside of the first part 570a of the frame 570. The first pin 571 may be disposed between both ends of the first part 570a. The first pin 571 may be inserted into a first guide slot 39L (see FIGS. 23 and 30) formed on the left surface of the head 391. The first guide slot 39L may be a groove recessed from the left surface of the head 391. The first guide slot 39L may be an arcuate slot that is convex forward. The first pin 571 may be movable along the first guide slot 39L.

The second pin 572 protrude from the inside of the second part 570b of the frame 570. The second pin 572 may be disposed between both ends of the second part 570b. The second pin 572 may be inserted into a second guide slot 39R formed on the right surface of the head 391. The second guide slot 39R may be a groove recessed from the right surface of the head 391. The second guide slot 39R may be an arcuate slot that is convex forward. The second pin 572 may be movable along the second guide slot 39R.

The first armrest 573 may be adjacent to a front end of the first part 570a of the frame 570, and may intersect the first part 570a. The first armrest 573 may protrude from the first part 570a to the inside of the frame 570. The first part 570a may be positioned on the first armrest 573. The first part 570a may be formed on an upper surface of the first armrest 573. The first armrest 573 may be referred to as a first supporter 573, a first tab 573, or a first protruding portion 573.

The second armrest 574 may be adjacent to a front end of the second part 570b of the frame 570, and may intersect the second part 570b. The second armrest 574 may protrude from the second part 570b to the inside of the frame 570. The second part 570b may be positioned on the second armrest 574. The second part 570b may be formed on an upper surface of the second armrest 574. The second armrest 574 may be referred to as a second supporter 574, a second tap 574, or a second protruding portion 574.

The first cover 575 may be disposed between the first armrest 573 and the second armrest 574, and may connect the first armrest 573 and the second armrest 574. The first cover 575 may extend from front ends of the armrests 573 and 574 in a longitudinal direction of the frame 570. The first cover 575 may be located at a lower position than the armrests 573 and 574. The first cover 575 may have a U-shaped cross-section. A first side wall 5751 of the first cover 575 may be bent from a first side of a bottom 5750, and may be connected to the first armrest 573. A second side wall 5752 of the first cover 575 may be bent from a second side of the bottom 5750, and may be connected to the second armrest 574. The cable C may be positioned on the bottom 5750 of the first cover 575, and may be routed into the cable groove 39G.

The second cover 576 may extend from the third part 570c of the frame 570. The second cover 576 may include a connecting portion 5761 and a cover portion 5762. The connecting portion 5761 may extend downward from the third part 570c. The cover portion 5762 may extend rearward from a lower end of the connecting portion 5761 in a curved manner. A rear end of the cover portion 5762 may be located at a higher position than a front end of the cover portion 5762.

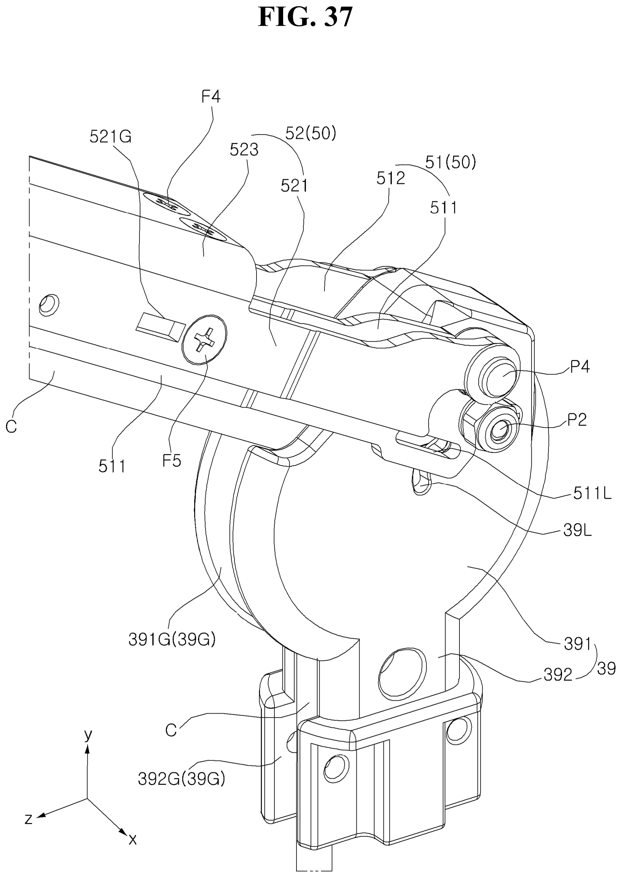

Referring to FIGS. 37 to 39, the first lower bar 511 of the lower arm 51 may be adjacent to a left surface of the head 391 of the arm mount 39. The second lower bar 512 of the lower arm 51 may be adjacent to a right surface of the head 391 of the arm mount 39.

A first slot 511L may be formed in the first lower bar 511. The first slot 511L may be adjacent to a rear end of the first lower bar 511. The first slot 511L may be elongated in a longitudinal direction of the first lower bar 511. The first slot 511L may partially overlap the first guide slot 39L in a thickness direction of the head 391, namely, a direction in which the first lower bar 511 and the second lower bar 512 are spaced apart from each other.

A second slot 512R may be formed in the second lower bar 512. The second slot 512R may be adjacent to a rear end of the second lower bar 512. The second slot 512R may be elongated in a longitudinal direction of the second lower bar 512. The second slot 512R may partially overlap the second guide slot 39R in the thickness direction of the head 391, namely, a direction in which the first lower bar 511 and the second lower bar 512 are spaced apart from each other.

The first pin 571 may pass through the first slot 511L and be inserted into the first guide slot 39L. The second pin 572 may pass through the second slot 512R and be inserted into the second guide slot 39R.

A lower side of the first lower bar 511 may be adjacent to the first armrest 573. The lower side of the first lower bar 511 may be positioned on the first armrest 573. A lower side of the second lower bar 512 may be adjacent to the second armrest 574. The lower side of the second lower bar 512 may be positioned on the second armrest 574.

The support arm 50 and the shield 57 may be tilted upward with respect to the arm mount 39. In response to the tilting (up) of the support arm 50 and the shield 57, the first pin 571 may move upward along the first guide slot 39L while moving from a front end to a rear end of the first slot 511L. In response to the tilting (up) of the support arm 50 and the shield 57, the second pin 572 may move upward along the second guide slot 39R while moving from a front end to a rear end of the second slot 512R.

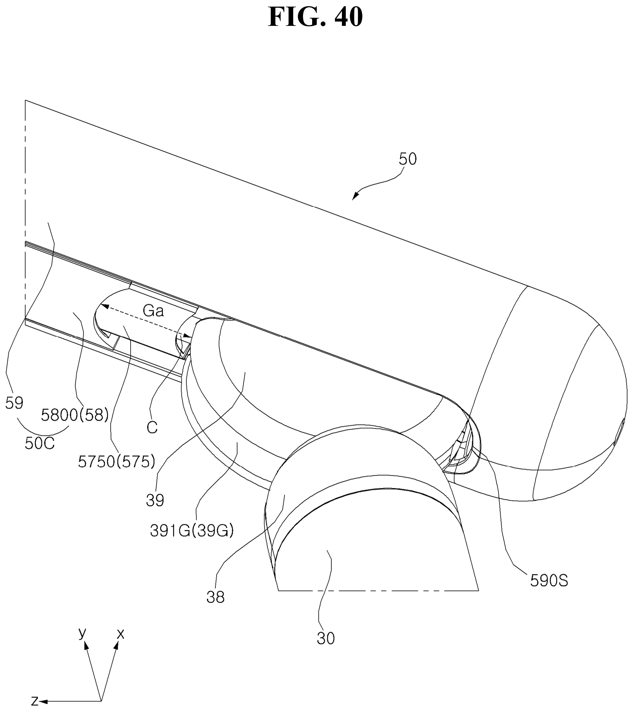

Referring to FIG. 40, when the support arm 50 is tilted upward with respect to the arm mount 39, the first cover 575 of the shield 57 may block a gap Ga between the bottom cover 58 of the arm cover 50C and the arm mount 39. The first cover 575 of the shield 57 can prevent a finger of a user from entering the gap Ga.

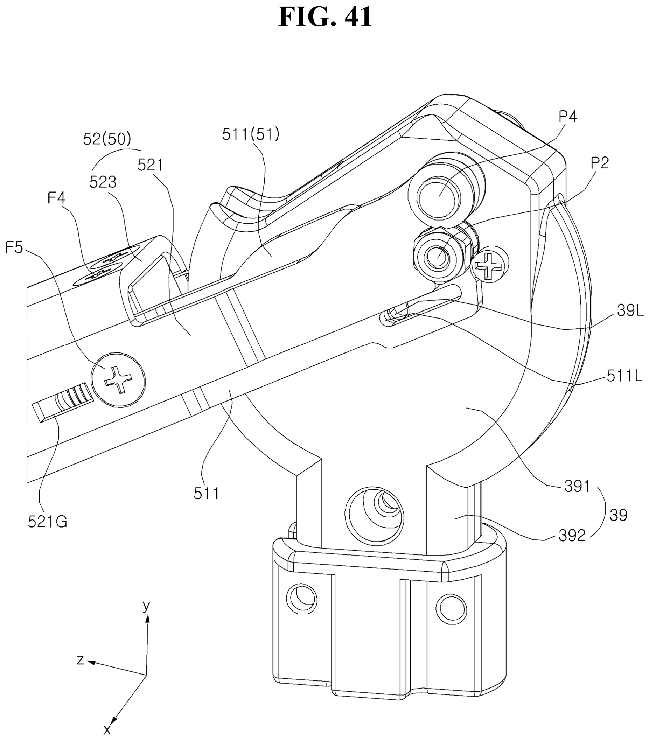

Referring to FIGS. 41 to 43, the support arm 50 and the shield 57 may be tilted downward with respect to the arm mount 39. In response to the tilting (down) of the support arm 50 and the shield 57, the first pin 571 may move downward while moving from a rear end to a front end of the first slot 511L. In response to the tilting (down) of the support arm 50 and the shield 57, the second pin 572 may move downward while moving from a rear end to a front end of the second slot 512R.

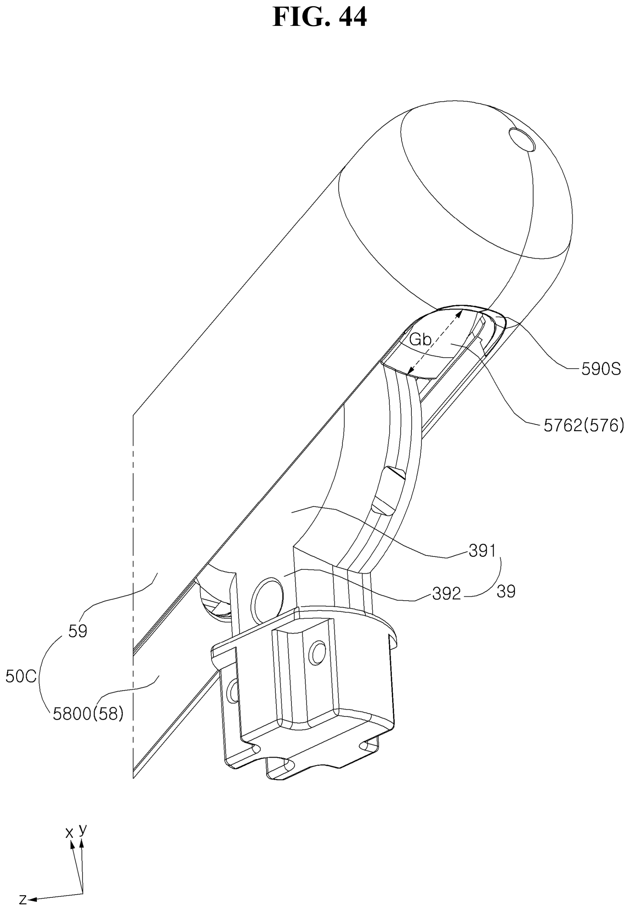

Referring to FIGS. 44, when the support arm 50 is tilted downward with respect to the arm mount 39, the second cover 576 of the shield 57 may block a gap Gb between the arm mount 39 and the slot 590S of the top cover 59. The second cover 576 of the shield 57 can prevent a finger of a user from entering the gap Gb.

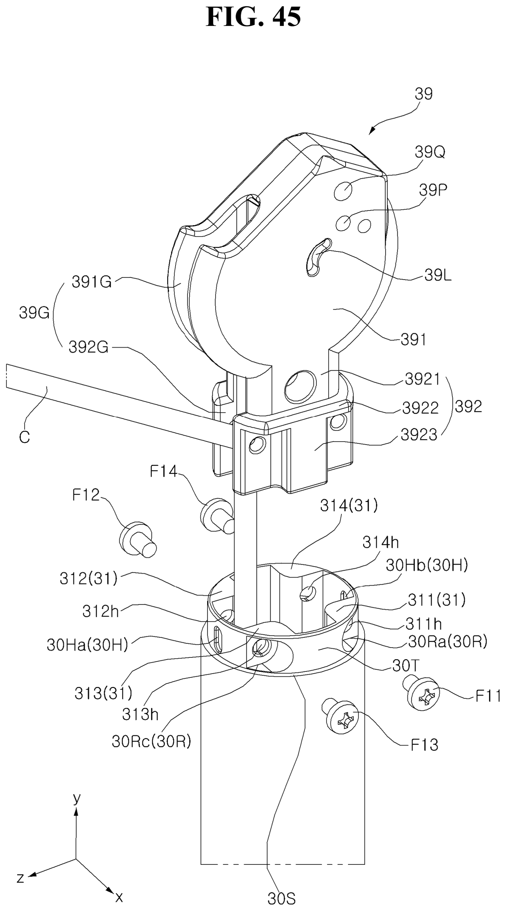

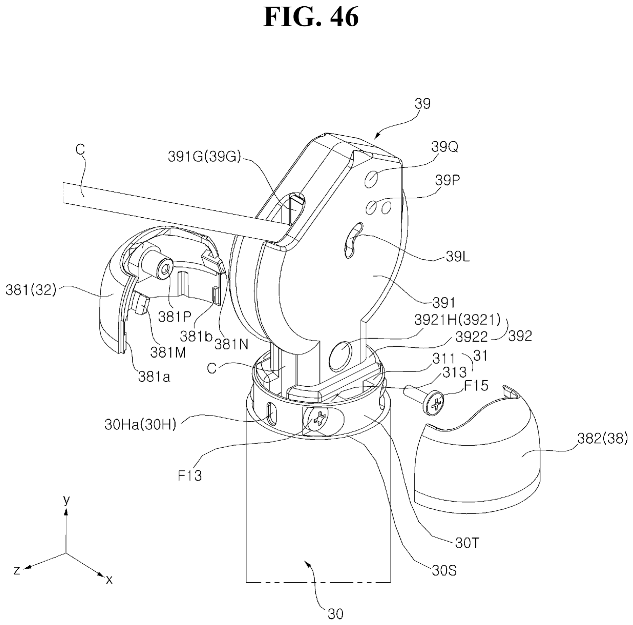

Referring to FIGS. 45 and 46, the pole 30 may extend in the vertical direction. The pole 30 may have a hollow cylindrical shape that is vertically long.

A rib 31 may be formed on an inner surface of the pole 30. The rib 31 may extend in a longitudinal direction of the pole 30. The rib 31 may have a triangular cross-section. The ribs 31 may be spaced apart from each other along an inner circumferential surface of the pole 30. First and second ribs 311 and 312 may be disposed opposite each other with respect to a center of the pole 30. The first and second ribs 311 and 312 may be spaced 180 degrees apart from each other with respect to the center of the pole 30. A third rib 313 may be positioned between the first rib 311 and the second rib 312. A fourth rib 314 may be positioned between the first rib 311 and the second rib 312, and may be disposed opposite the third rib 313 with respect to the center of the pole 30. The third and fourth ribs 313 and 314 may be spaced 180 degrees apart from each other with respect to the center of the pole 30.

A top part 30T may define a top of the pole 30. A diameter of the top part 30T may be greater than a diameter of a remaining part of the pole 30. A stepped portion 30S may be formed between the top part 30T and the remaining part of the pole 30.

A recessed portion 30R may be recessed from a lateral surface of the top part 30T toward the rib 31. A first recessed portion 30Ra may be recessed from the lateral surface of the top part 30T toward the first rib 311. A first hole 311h may be formed in a portion of the first rib 311 that corresponds to the first recessed portion 30Ra. A second recessed portion may be recessed from the lateral surface of the top part 30T toward the second rib 312. A second hole 312h may be formed in a portion of the second rib 312 that corresponds to the second recessed portion. A third recessed portion 30Rc may be recessed from the lateral surface of the top part 30T toward the third rib 313. A third hole 313h may be formed in a portion of the third rib 313 that corresponds to the third recessed portion 30Rc. A fourth recessed portion may be recessed from the lateral surface of the top part 30T toward the fourth rib 314. A fourth hole 314h may be formed in a portion of the fourth rib 314 that corresponds to the fourth recessed portion.

A coupling hole 30H may be formed in the top part 30T, and may be disposed between the ribs 31. A first coupling hole 30Ha may be disposed between the second rib 312 and the third rib 313. A second coupling hole 30Hb may be disposed between the first rib 311 and the fourth rib 314.

The body 392 of the arm mount 39 may be inserted inside the pole 30. The body 392 may include an upper part 3921, a middle part 3922, and a lower part 3923.

The upper part 3921 may define an upper portion of the body 392, and may be connected to the head 391 of the arm mount 39. The lower part 3923 may define a lower portion of the body 392. The lower part 3923 may have a cross-shaped cross-section. The lower part 3923 may be inserted between the first to fourth ribs 311, 312, 313, 314. The middle part 3922 may be formed between the upper part 3921 and the lower part 3923. A width of the middle part 3922 may be greater than a width of the upper part 3921 and a width of the lower part 3923. The middle part 3922 may be adjacent to upper ends of the ribs 311. The middle part 3922 may be positioned on the ribs 311.

A first fastening member F11 may pass through the first hole 311h and be coupled to the lower part 3923. A second fastening member F12 may pass through the second hole 312h and be coupled to the lower part 3923. A third fastening member F13 may pass through the third hole 313h and be coupled to the lower part 3923. A fourth fastening member F14 may pass through the fourth hole 314h and be coupled to the lower part 3923. The fastening members F11, F12, F13, and F14 may be screws.

Accordingly, the arm mount 39 may be coupled to the pole 30. The cable C may be positioned within the pole 30. The cable C may be electrically connected to the base 20.

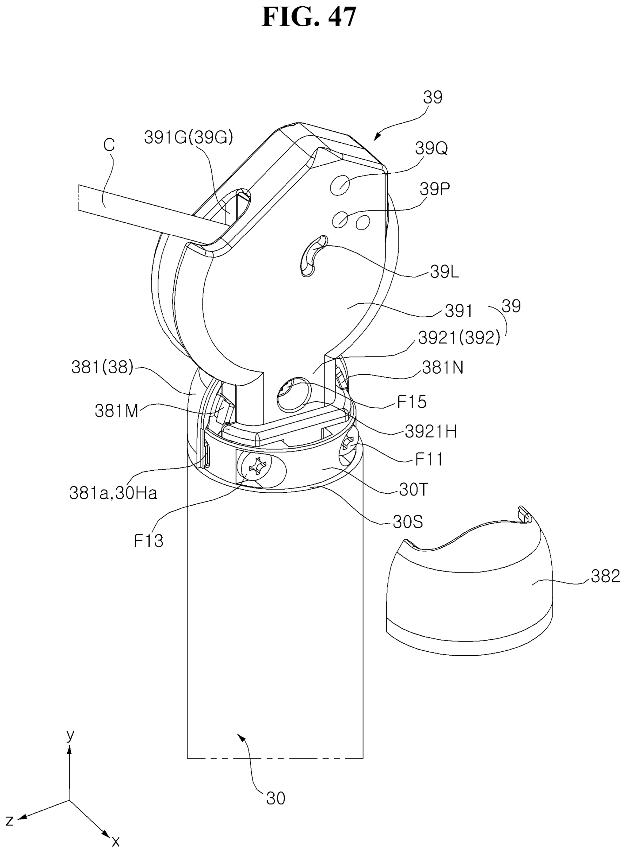

Referring to FIGS. 46 and 47, a cap 38 may include a first body 381 and a second body 382. The first body 381 and the second body 382 may be disposed opposite each other with respect to the top part 30T of the pole 30. The first body 381 may be located on the right side of the top part 30T, and may be convex rightward. The second body 382 may be located on the left side of the top part 30T, and may be convex leftward.

A first protrusion 381a may protrude from an inner surface of the first body 381 while being adjacent to a first edge of the first body 381. A second protrusion 381b may protrude from the inner surface of the first body 381 while being adjacent to a second edge of the first body 381. The first protrusion 381a may be inserted into and coupled to the first coupling hole 30Ha, and the second protrusion 381b may be inserted into and coupled to the second coupling hole 30Hb. Accordingly, the first body 381 may be coupled to the pole 30.

A fixing pin 381P may protrude from the inside of the first body 381. The fixing pin 381P may be inserted into a hole 3921H of the upper part 3921 of the body 392. A fastening member F15 such as a screw may be fastened to the fixing pin 381P through the hole 3921H. Accordingly, the first body 381 may be coupled to the arm mount 39.

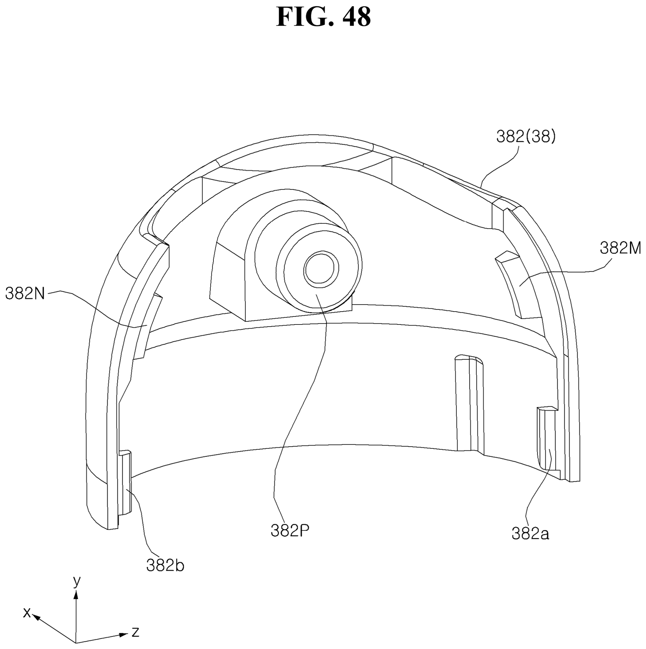

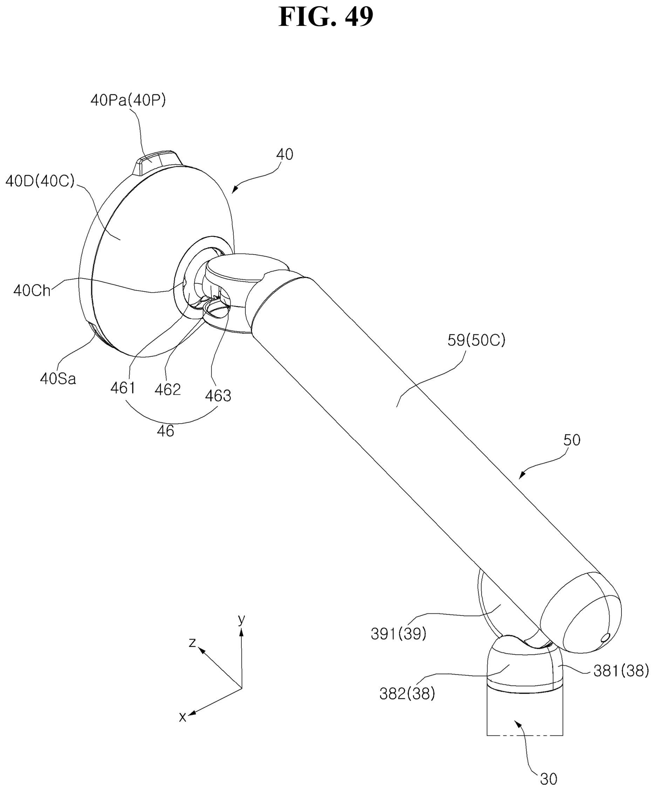

Referring to FIGS. 48 and 49 along with FIGS. 46 and 47, a first protrusion 382a may protrude from an inner surface of the second body 382 while being adjacent to a first edge of the second body 382. A second protrusion 382b may protrude from the inner surface of the second body 382 while being adjacent to a second edge of the second body 382. The first protrusion 382a may be inserted into and coupled to the first coupling hole 30Ha, and the second protrusion 382b may be inserted into and coupled to the second coupling hole 30Hb. Accordingly, the second body 382 may be coupled to the pole 30.

A first hook 381M may protrude toward the second body 382 from the first body 381 while being adjacent to the first edge of the first body 381. A second hook 381N may protrude toward the second body 382 from the first body 381 while being adjacent to the second edge of the first body 381. A first coupling protrusion 382M may be formed on the inner surface of the second body 382 to correspond to the first hook 381M, and the first hook 381M may be hooked onto the first coupling protrusion 382M. A second coupling protrusion 382N may be formed on the inner surface of the second body 382 to correspond to the second hook 381N, the second hook 382N may be hooked onto the second coupling protrusion 382N. Accordingly, the second body 382 may be coupled to the first body 381.

A guide pin 382P may protrude from the inside of the second body 382. The guide pin 382P may be inserted into the hole 3921H of the upper part 3921 of the body 392. Accordingly, the guide pin 382P and the hole 3921H may guide the coupling of the second body 382 and the first body 381.

The cap 38 coupled to the pole 30 and the arm mount 39 may cover the top part 30T of the pole 30 and the body 392 of the arm mount 39. The cap 38 may be positioned on the stepped portion 30S.

Referring to FIGS. 1 to 49, a display device 1 may include: a display panel 11; an arm mount 39 spaced apart from the display panel 11; and a support arm 50 to connect the display panel 11 and the arm mount 39. The support arm 50 may include: an inner arm 51, 52 rotatably coupled to the display panel 11 and the arm mount 39; and an arm cover 50C to cover the inner arm 50A.

The display device 1 may further include: a coupler 614 to couple the support arm 50 to the display panel 11. The inner arm 50A may have a first end rotatably coupled to the coupler 614 and a second end rotatably coupled to the arm mount 39.

The arm cover 50C may include: a bottom cover 58 extending along a bottom of the inner arm 50A; and a top cover 59 extending along a top of the inner arm 50A. The bottom cover 58 and the top cover 59 may cover the inner arm 50A.

The bottom cover 58 may be coupled to the inner arm 50A. The top cover 59 may be coupled to the bottom cover 58 while sliding along the bottom cover 58.

The bottom cover 58 may include: a base 580 extending along the inner arm 50A and covering the bottom of the inner arm 50A; a first side part 581 extending along a first side of the base 580 and coupled to a first side surface of the inner arm 50A; and a second side part 582 extending along a second side of the base 580 and coupled to a second side surface of the inner arm 50A.

The bottom cover 58 may further include a hook 581K protruding from an inner surface of the first side part 581 and coupled to the first side surface of the inner arm 50A.

The bottom cover 58 may further include a pair of slits 581S formed in the first side part 581. The hook 581K may be disposed between the pair of slits 581S.

The base 580 may include: a bottom 5800; a first side wall 5801 bent from a first side of the bottom 5800 and connected to the first side part 581; and a second side wall 5802 bent from a second side of the bottom 5800 and connected to the second side part 582. The top cover 59 may include: a body 590 having a hollow cylindrical shape, the body 590 including a slot 590S formed on a lateral surface of the body 590 and in which the bottom 5800 of the base 580 is positioned; a first rib 591 protruding to an inside of the body 590 from a first side 5901 of the body 590 that defines the slot 590S, the first rib 591 being slidably coupled to the first side wall 5801; and a second rib 592 protruding to the inside of the body 590 from a second side 5902 of the body 590 that defines the slot 590S, the second rib 592 being slidably coupled to the second side wall 5802.

The base 580 may further include: a first guide groove 5801g formed on an outer surface of the first side wall 5801 and into which the first rib 591 is movably inserted; and an insertion groove 5801h formed in the first guide groove 5801g. The top cover 59 may further include a hook 591K protruding from the first rib 591 and coupled to the insertion groove 5801h.

The support arm 50 may further include a shield 57 to block a gap between the arm cover 50C and the arm mount 39.

The arm cover 50C may include: a bottom cover 58 extending along the inner arm 50A; and a top cover 59 coupled to the bottom cover 58, the top cover 59 having a slot 590S formed on a lateral surface of the top cover 59 and in which the bottom cover 58 is positioned. The gap between the arm cover 50C and the arm mount 39 may be formed between the bottom cover 58 and the arm mount 39 or between the arm mount 39 and the slot 590S.

The shield 57 may include: a frame 570 extending along a side surface of the arm mount 39; a first cover 575 extending from a first end of the frame 570; and a second cover 576 extending from a second end of the frame 570. The shield 57 may be configured to rotate in response to rotation of the support arm 50.

The arm mount 39 may include a guide slot 39L in an arcuate shape, the guide slot 39L being formed on one side of the arm mount 39. The inner arm 50A may include a lower bar 511 adjacent to the one side of the arm mount 39, the lower bar 511 having a slot 511L extending in a longitudinal direction of the lower bar 511 and partially overlapping the guide slot 39L. The shield 57 may further include a pin 571 protruding from an inside of the frame 570, the pin 571 being inserted into the guide slot 39L through the slot 511L.

The shield 57 may further include an armrest 573 formed at the first end of the frame 570 and at which the lower bar 511 is positioned. The first cover 575 of the shield 57 may extend from the armrest 573.

The guide slot 39L may include: a first guide slot 39L in an arcuate shape, the first guide slot 39L being formed on a first side surface of the arm mount 39; and a second guide slot 39R in an arcuate shape, the second guide slot 39R being formed on a second side surface of the arm mount 39 that is opposite the first side surface. The lower bar 511 may include: a first lower bar 511 adjacent to the first side surface of the arm mount 39, the first lower bar 511 including a first slot 511L having a linear shape and partially overlapping the first guide slot 39L; and a second lower bar 512 adjacent to the second side surface of the arm mount 39, the second lower bar 512 including a second slot 512R having a linear shape and partially overlapping the second guide slot 39R. The pin 571 may include: a first pin 571 inserted into the first guide slot 39L through the first slot 511L; and a second pin 572 inserted into the second guide slot 39R through the second slot 512R.

The display device 1 may further include: a display 10 including the display panel 11; and a connector 40 including a substrate 48 electrically connected to the display 10, the connector 40 connecting the support arm 50 to the display 10.

The connector 40 may further include a front bracket 41 coupled to a rear of the display 10. The substrate 48 may have an open ring shape and may include a terminal 48T disposed in a hole 41M of the front bracket 41.

The connector 40 may further include: a rear bracket 42 positioned at a rear of the front bracket 41 and to which the front bracket 41 is rotatably coupled; a cable holder 49 having a hollow space 49H in which the rear bracket 42 is disposed; a cable C disposed around the cable holder 49; and a cable connector 48A mounted on the substrate 48 and by which the cable C is electrically connected to the substrate 48.

The cable holder 49 may further include: a slot 49S formed on a lateral surface of the cable holder 49 and in which a portion of the cable C is positioned; and a flange 495 protruding from the lateral surface of the cable holder 49 and adjacent to a rear surface of the substrate 48.

A display device 1 may include: a display 10; a front bracket 41 coupled to a rear of the display 10; and a substrate 48 coupled to a rear of the front bracket 41 and electrically connected to the display 10. The substrate 48 may have an open ring shape.

The display device according to the present disclosure has the following effects.

According to at least one of the embodiments of the present disclosure, it is possible to provide a display device including a stand for supporting a display.

According to at least one of the embodiments of the present disclosure, it is possible to provide a structure for freely adjusting the angle or height of a display.

According to at least one of the embodiments of the present disclosure, it is possible to provide a rotational structure of a support arm of a display.

According to at least one of the embodiments of the present disclosure, it is possible to provide a coupling structure of an arm cover of a support arm.

According to at least one of the embodiments of the present disclosure, it is possible to provide a structure for blocking a gap between an arm cover and an arm mount.

According to at least one of the embodiments of the present disclosure, it is possible to provide a connector structure for connecting a support arm to a display.

According to at least one of the embodiments of the present disclosure, it is possible to provide a structure of a substrate of a connector and a cable holder connected to the substrate.

Certain embodiments or other embodiments of the invention described above are not mutually exclusive or distinct from each other. Any or all elements of the embodiments of the invention described above may be combined or combined with each other in configuration or function.

For example, a configuration "A" described in one embodiment of the invention and the drawings and a configuration "B" described in another embodiment of the invention and the drawings may be combined with each other. Namely, although the combination between the configurations is not directly described, the combination is possible except in the case where it is described that the combination is impossible.

The foregoing embodiments are merely examples and are not to be considered as limiting the present disclosure. The scope of the present disclosure should be determined by rational interpretation of the appended claims, and all modifications within the equivalents of the disclosure are intended to be included within the scope of the present disclosure.

## Claims

1. A display device (1) comprising:
a display (10) including a display panel (11) and a battery;
a base (20);
a pole (30) coupled to the base (20);
an arm mount (39) spaced apart from the display (10);
a support arm (50) connecting the display (10) and the arm mount (39); and
a connector (40) disposed between the support arm (50) and the display (10) and coupled to the display (10),
wherein the support arm (50) comprises:
an inner arm (50A) rotatably coupled to the display (10) and the arm mount (39); and
an arm cover (50C) covering the inner arm (50A).

2. The display device (1) of claim 1, further comprising a coupler (614) coupling the support arm (50) to the display (10),
wherein a first end of the inner arm (50A) is rotatably coupled to the coupler (614), and
wherein a second end of the inner arm (50A) is rotatably coupled to the arm mount (50C).

3. The display device (1) of claim 1 or 2, wherein the arm cover (50C) comprises:
a bottom cover (58) extending along a bottom of the inner arm (50A); and
a top cover (59) extending along a top of the inner arm (50A), and
wherein the bottom cover (58) and the top cover (59) surround the inner arm (50A).

4. The display device (1) of claim 3, wherein the bottom cover (58) is coupled to the inner arm (50A), and wherein the top cover (59) is coupled to the bottom cover (58) while sliding along the bottom cover (58).

5. The display device (1) of claim 3 or 4, wherein the bottom cover (58) comprises:
a base (580) extending along the inner arm (50A) and covering the bottom of the inner arm (50A);
a first side part (581) extending along a first side of the base (580), and coupled to a first side surface of the inner arm (50A); and
a second side part (582) extending along a second side of the base (580), and coupled to a second side surface of the inner arm (50A).

6. The display device (1) of claim 5, wherein the bottom cover (58) further comprises a hook (581K) protruding from an inner surface of the first side part (581), and coupled to the first side surface of the inner arm (50A).

7. The display device (1) of claim 6, wherein the bottom cover (58) further comprises a pair of slits (581S) formed in the first side part (581), and
wherein the hook (581K) is disposed between the pair of slits (581S).

8. The display device (1) of any one of claims 5 to 7, wherein the base (580) comprises:
a bottom (5800);
a first side wall (5801) bent from a first side of the bottom (5800) and connected to the first side part (581); and
a second side wall (5802) bent from a second side of the bottom (5800) and connected to the second side part (582), and
wherein the top cover (59) comprises:
a body (590) having a hollow cylindrical shape, the body (590) including a slot (590S) formed on a lateral surface of the body (590) and in which the bottom (5800) of the base (580) is positioned;
a first rib (591) protruding to an inside of the body (590) from a first side of the body (590) which forms the slot (590S), and slidably coupled to the first side wall (5801); and
a second rib (592) protruding to the inside of the body (590) from a second side of the body (590) which forms the slot (590S), and slidably coupled to the second side wall (5802).

9. The display device (1) of claim 8, wherein the base (580) further comprises:
a first guide groove (5801g) formed on an outer surface of the first side wall (5801) and into which the first rib (591) is movably inserted; and
an insertion groove (5801h) formed in the first guide groove (5801g), and
wherein the top cover (59) further comprises a hook (591K) protruding from the first rib (591) and coupled to the insertion groove (5801g).

10. The display device of any one of claims 1 to 9, further comprising a shield blocking a gap between the arm cover (50C) and the arm mount (39).

11. The display device (1) of claim 10, wherein the arm cover (50C) comprises:
a bottom cover (58) extending along the inner arm (50A);
a top cover (59) coupled to the bottom cover (58), the top cover (59) including a slot (590S) formed on a lateral surface of the top cover (59) and in which the bottom cover (58) is positioned, and
wherein the gap between the arm cover (50C) and the arm mount (39) is formed between the bottom cover (58) and the arm mount (39) or between the arm mount (39) and the slot (590S).

12. The display device (1) of claim 10, wherein the shield (57) comprises:
a frame (570) extending along a side surface of the arm mount (39);
a first cover (575) extending from a first end of the frame (570); and
a second cover (576) extending from a second end of the frame (570), and
wherein the shield (57) rotates in response to rotation of the support arm (50).

13. The display device (1) of claim 12, wherein the arm mount (39) comprises a guide slot (39L) in a shape of an arc, the guide slot (39L) being formed on one side of the arm mount (39),
wherein the inner arm (50A) comprises a lower bar (511) adjacent to the one side of the arm mount (39), the lower bar (511) including a slot (511L) extending in a longitudinal direction of the lower bar (511) and partially overlapping the guide slot (511L), and
wherein the shield (57) further comprises a pin (571) protruding from an inside of the frame (570), and inserted into the guide slot (39L) through the slot (511L).

14. The display device (1) of claim 13, wherein the shield (57) further comprises an armrest (573) formed at the first end of the frame (570) and at which the lower bar (511) is positioned, and
wherein the first cover (575) of the shield (57) extends from the armrest (573).

15. The display device (1) of claim 13 or 14, wherein the guide slot (39L) comprises:
a first guide slot (39L) in a shape of an arc, the first guide slot (39L) being formed on a first side surface of the arm mount (39); and
a second guide slot (39R) in a shape of an arc, the second guide slot (39R) being formed on a second side surface of the arm mount (39) which is opposite the first side surface,
wherein the lower bar (511) comprises:
a first lower bar (511) adjacent to the first side surface of the arm mount (39), the first lower bar (511) including a first slot (511L) having a linear shape and partially overlapping the first guide slot (39L); and
a second lower bar (512) adjacent to the second side surface of the arm mount (39), the second lower bar (512) including a second slot (512R) having a linear shape and partially overlapping the second guide slot (39R), and
wherein the pin (571) comprises:
a first pin (571) inserted into the first guide slot (39L) through the first slot (511L); and
a second pin (572) inserted into the second guide slot (39R) through the second slot (512R).
